# EUROPEAN PATENT SPECIFICATION

(11) **EP 3 518 604 B1**
(45) Date of publication and mention of the grant of the patent: **01.10.2025**
(21) Application number: 17852195.1
(22) Date of filing: 29.06.2017
(51) Int. Cl.: H04B 7/26, H04L 5/00, H04W 72/0446, H04W 16/10, H04W 72/23

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(30) Priority: 23.09.2016 CN 201610849710
(43) Date of publication of application: 31.07.2019
(73) Proprietor: Datang Mobile Communications Equipment Co., Ltd., Beijing 100085 (CN)
(72) Inventor: GAO, Xuejuan, Beijing 100191 (CN); PAN, Xueming, Beijing 100191 (CN); CHENG, Fang-Chen, Beijing 100191 (CN)
(74) Representative: Ipsilon
(86) International application number: PCT/CN2017/090886
(87) International publication number: WO 2018/054123

(56) References cited:
- EP-A1- 2 983 429
- EP-A1- 3 021 626
- CN-A- 102 014 505
- CN-A- 105 517 061
- US-A1- 2013 343 356
- US-A1- 2014 092 921
- US-A1- 2015 215 963
- US-A1- 2016 204 930
- HUAWEI ET AL: "Discussion on frame structure for NR", vol. RAN WG1, no. Nanjing, China; 20160523 - 20160527, 15 May 2016 (2016-05-15), XP051089779, Retrieved from the Internet <URL:http://www.3gpp.org/ftp/tsg_ran/WG1_RL1/TSGR1_85/Docs/> [retrieved on 20160515]
- FUJITSU: "Discussion on flexible/dynamic TDD", vol. RAN WG1, no. Nanjing, China; 20160523 - 20160527, 13 May 2016 (2016-05-13), XP051090158, Retrieved from the Internet <URL:http://www.3gpp.org/ftp/tsg_ran/WG1_RL1/TSGR1_85/Docs/> [retrieved on 20160513]
- SAMSUNG: "Dynamic reconfiguration of TDD UL-DL configuration", 3GPP DRAFT; R1-122267 DYNAMIC RECONFIGURATION OF TDD UL-DL CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600530, [retrieved on 20120512]
- LG ELECTRONICS: "Subframe and mini-subframe definition for frame structure of NR", vol. RAN WG1, no. Gothenburg, Sweden; 20160822 - 20160826, 13 August 2016 (2016-08-13), XP051132938, Retrieved from the Internet <URL:http://www.3gpp.org/ftp/tsg_ran/WG1_RL1/TSGR1_86/Docs/> [retrieved on 20160813]
- NOKIA NETWORKS ET AL: "On LAA PUSCH scheduling and UL grant enhancements", vol. RAN WG1, no. St. Julian's, Malta; 20160215 - 20160219, 5 February 2016 (2016-02-05), XP051063894, Retrieved from the Internet <URL:http://www.3gpp.org/ftp/tsg_ran/WG1_RL1/TSGR1_84/Docs/> [retrieved on 20160205]
- SAMSUNG: "Dynamic reconfiguration of TDD UL-DL configuration", 3GPP TSG RAN WG1 MEETING #69, R1-122267, 21 May 2012 (2012-05-21), XP050600530

## Description

### Field

The present invention relates to the field of communications, and particularly to a method and device for transmitting data.

### Background

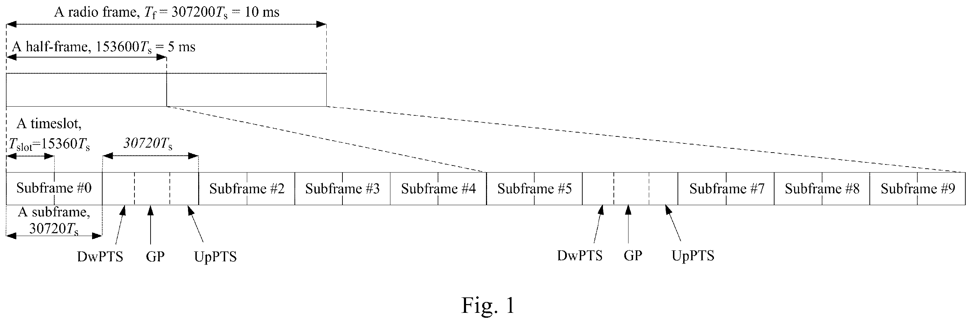

Fig. 1 illustrates the Frame Structure type 2 (FS2) defined for the Time Division Duplex (TDD) mode in the existing Long Term Evolution (LTE) system. There are different subframes or slots, over the same frequency, for uplink and downlink transmission. Each 10ms radio frame includes two 5ms half-frames, and each half-frame includes five subframes with the length of lms. The subframes in the FS2 are categorized into downlink subframe, uplink subframes, and special subframes, and each special subframe includes a Downlink Pilot Time Slot (DwPTS), a Guard Period (GP), and an Uplink Pilot Time Slot (UpPTS). Each half-frame includes at least one downlink subframe, at least one uplink subframe, and at most one special subframe. Seven TDD uplink-downlink configurations as depicted in Table 1, and ten special subframe structures as depicted in Table 2 are defined for different downlink to uplink switching periodicities and uplink-downlink allocation proportions.

**Table 1: Uplink-downlink configurations**

| Uplink-downlink configuration | Downlink-to-Uplink Switching periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

**Table 2: Special subframe configurations (including DwPTS/GP/UpPTS lengths)**

| Special subframe configuration | Normal cyclic prefix in the downlink | | | Extended cyclic prefix in the downlink | | |
|---|---|---|---|---|---|---|
| | DwPTS | UpPTS | | DwPTS | UpPTS | |
| | | Normal cyclic prefix in the uplink | Extended cyclic prefix in the uplink | | Normal cyclic prefix in the uplink | Extended cyclic prefix in the uplink |
| 0 | 6592·*Tₛ* | (1+X)·2192·*Tₛ* | (1+X)·2560·*Tₛ* | 7680·*Tₛ* | (1+X)·2192·*Tₛ* | (1+X)·2560·*Tₛ* |
| 1 | 19760·*Tₛ* | | | 20480·*Tₛ* | | |
| 2 | 21952·*Tₛ* | | | 23040·*Tₛ* | | |
| 3 | 24144·*Tₛ* | | | 25600·*Tₛ* | | |
| 4 | 26336·*Tₛ* | | | 7680·*Tₛ* | (2+X)·2192·*Tₛ* | (2+X)·2560·*Tₛ* |
| 5 | 6592·*Tₛ* | (2+X)·2192·*Tₛ* | (2+X)·2560·*Tₛ* | 20480·*Tₛ* | | |
| 6 | 19760·*Tₛ* | | | 23040·*Tₛ* | | |
| 7 | 21952·*Tₛ* | | | 12800·*Tₛ* | | |
| 8 | 24144·*Tₛ* | | | - | - | - |
| 9 | 13168·*Tₛ* | | | - | - | - |

Where Ts is an interval of sampling time in the system, and X is a predefined or preconfigured value.

In the LTE system, uplink and downlink resources are allocated by defining the TDD frame structure above, so a cell can only be configured with one TDD frame structure, and since only the fixed division of the uplink and downlink resources is supported, where the division is notified via system information broadcasted in the cell, the fixed division of the uplink and downlink resources in the cell is shared among all the UEs in the cell.

Furthermore in the LTE system, a GP shall be arranged between an uplink resource and a downlink resource to thereby avoid interference between the uplink and the downlink in the same cell, and to switch from the downlink to the uplink. A GP only exists in a special subframe in each TDD uplink-downlink configuration, and the length of the GP is determined by a special subframe configuration corresponding to a division of the lengths of a downlink resource (a DwPTS component), an uplink resource (an UpPTS component), and a GP component in a special subframe. The special subframe configuration is also notified in a cell via system information broadcasted in the cell, so the fixed special subframe configuration in the cell is shared among all the UEs in the cell.

As there are a growing demand for mobile communication services, the International Telecommunication Union (ITU), the 3rd Generation Partnership Project (3GPP), and other organizations come to research a new wireless communication system (e.g., a 5G system). The new wireless communication system can support various coexisting types of services, e.g., an enhanced Mobile Broad Band (eMBB) service, an Ultra Reliable & Low Latency Communication (URLLC) service, a Massive Machine Type Communication (mMTC) service, etc., and the amount of traffic of the same service may also vary. When uplink and downlink traffic shares the same frequency resource in a Time Division Multiplexing (TDM) mode, in order to support the different types of services and demands for the amount of traffic, a flexible and varying division of resources shall be supported.

There has been absent so far a definite solution to transmitting data over dynamically allocated uplink and downlink resources in a new wireless communication system.

A document (US2015215963 A1) relates to a method and BS to utilize a new Special Sub-Frame (SSF) in a legacy Time Division Duplex (TDD) cellular network, the BS is enabled to support the new SSF, the method notifies one or more User Equipments (UEs) served by the BS of a legacy SSF configuration, which actually is the corresponding new SSF configuration; schedules a downlink transmission including the new SSF from the BS to at least one of the one or more UEs respectively and performing the scheduled downlink transmission to the respective UE; and when receiving a response in a uplink transmission from the UE in response to the scheduled downlink transmission, determines that the UE is enabled to support the new SSF and thus communicating with the UE by means of the new SSF.

A document (3GPP TSG RAN WG1 Meeting #85, Nanjing, China, May 23-27, 2016; Huawei, HiSilicon; Title: Discussion on frame structure for NR) discusses frame structure for NR. A wide range of diverse applications and deployment scenarios has agreed for NR, and multiple numerologies were agreed to be supported in NR. Therefore, a frame structure of NR should provide full flexibility and be configurable to different numerologies. Particularly, it needs to provide flexibility on different parameters, such as subcarrier spacing, cyclic prefix length, subframe duration and GP (Guard Period) duration. Moreover, multiple numerologies on a single continuous block of spectrum can be supported for enabling flexible resource flexible resource multiplexing between different services.

A document (3GPP TSG RAN WG1 Meeting #85, Nanjing, China, May 23-27, 2016; Fujitsu, Title: Discussion on flexible/dynamic TDD) discusses possible sub-frame definition including DL-only sub-frame, UL-only sub-frame and Hybrid sub-frame. The Hybrid sub-frame includes both DL and UL transmission.

A document (SAMSUNG: "Dynamic reconfiguration of TDD UL-DL configuration", 3GPP DRAFT; R1-122267, May 12 2012) discusses Semi-static configuration such as SIB update or RRC-signaling incur ambiguity issues between eNB and UE about when the changed configuration would apply in the cell, and HARQ discontinuity issues during the reconfiguration. Moreover, frequent update of the system information whenever the reconfiguration is necessary aggravates the problems and can be a burden to the network with increasing impacts to legacy UEs. For faster reconfiguration of TDD UL-DL configuration and diminishing impacts to legacy UEs, dynamic reconfiguration based on L1 (in PDCCH) and MAC (in PDSCH) could be more desirable which informs only the non-legacy UEs of the reconfiguration without system information update in a legacy UE transparent way.

A document (LG ELECTRONICS: "Subframe and mini-subframe definition for frame structure of NR", R1-166881, 2016-8-13) discusses definition of Interval X, (Mini-) subframe types, subframe type indication mechanism, subframe duration, definition of resource blocl.

A document (Nokia Networks: "On LAA PUSCH scheduling and UL grant enhancements", R1-160788, 2016-2-5) discusses UL grant enhancements when using Asynchronous UL HARQ in LAA.

### Summary

Embodiments of the invention provide a method and device for transmitting data so as to address transmission of data over dynamically allocated uplink and downlink resources in a new wireless communication systen.

The invention is defined in the appended independent claims. Further embodiments are defined in the dependent claims. Any embodiments, examples, aspects or implementations not being part of the claims, are only presented as information.

In the methods and devices according to the embodiments of the invention, the eNB configures each UE with a time unit specific to the UE so that each UE transmits in the time unit specific to the UE, there may be different start positions of the time units of the different UEs, and there may be also different numbers and lengths of uplink regions and/or downlink regions in the time units of the different UEs, so that a flexible and varying division of resources can be supported.

### Brief Description of the Drawings

Fig. 1 is a schematic structural diagram of the FS2 in the LTE system in the prior art.
Fig. 2 is a schematic diagram of a method for transmitting data at the UE side according to an embodiment of the invention.
Fig. 3 is a schematic diagram of a method for transmitting data at the eNB side according to an embodiment of the invention
Fig. 4A is a schematic diagram of a first division of respective regions in a time unit of a UE according to a first embodiment of the invention.
Fig. 4B is a schematic diagram of a second division of respective regions in a time unit of a UE according to the first embodiment of the invention.
Fig. 4C is a schematic diagram of a third division of respective regions in a time unit of a UE according to the first embodiment of the invention.
Fig. 4D is a schematic diagram of a fourth division of respective regions in a time unit of a UE according to the first embodiment of the invention.
Fig. 5 is a schematic diagram of a UE according to an embodiment of the invention.
Fig. 6 is a schematic diagram of another UE according to an embodiment of the invention.
Fig. 7 is a schematic diagram of an eNB according to an embodiment of the invention.
Fig. 8 is a schematic diagram of another eNB according to an embodiment of the invention.

### Detailed Description of the Embodiments

In order to make the objects, technical solutions, and advantages of the embodiments of the invention more apparent, the technical solutions according to the embodiments of the invention will be described below clearly and fully with reference to the drawings in the embodiments of the invention, and apparently the embodiments to be described below are only a part but not all of the embodiments of the invention.

In the embodiments of the invention, each UE is configured with a specific time unit structure so that the UE can transmit data in its specific time unit. The time unit refers to a time unit on a time axis along which a UE transmits data, and start positions of time units of different UEs may be the same, or a part of the start positions may be the same, or each of the start positions may be different from any one of the other start positions. A time unit includes at least one uplink (UL) region for uplink transmission, and/or at least one downlink (DL) region for downlink transmission. Optionally a time unit further includes a GP region (which can also be referred to as a blank region).

Optionally, the sizes of respective downlink regions in a time unit may or may not be the same; and for example, the first downlink region in a time unit includes two symbols, and the second downlink region in the time unit includes three symbols.

Optionally, the sizes of respective uplink regions in a time unit may or may not be the same; and for example, the first uplink region in a time unit includes three symbols, and the second uplink region in the time unit includes four symbols.

Optionally, the symbol as mentioned in the invention may be an Orthogonal Frequency Division Multiplex (OFDM) symbol, or may be a Single Carrier Frequency Division Multiple Access (SC-FDMA), and of course, other multi-access symbols will not be precluded, and the same will apply hereinafter.

In the embodiments of the invention, a time unit is one or more slots; or a time unit is one or more subframes.

Optionally, a time unit is one or more consecutive slots; or a time unit is one or more consecutive subframes.

Optionally, the lengths of time units of different UEs are the same.

In the embodiments of the invention, for different services or transmission, the number of uplink regions and/or downlink regions in a time unit may or may not be the same; and for different services or transmission, the length of a time unit may or may not be the same. For different services or transmission, a correspondence relationship between DL and UL regions in a time unit may be defined uniformly or separately.

For example, for an eMBB service, a time unit includes one downlink region and one uplink region, and for example, the downlink region corresponds to the uplink region; and for a URLLC service, a time unit includes two downlink regions and two uplink regions, and for example, the first downlink region corresponds to the first uplink region, and the second downlink region corresponds to the second uplink region.

The embodiments of the invention will be described below in further details with reference to the drawings. It shall be appreciated that the embodiments described here are only intended to illustrate and explain the invention, but not to limit the invention thereto.

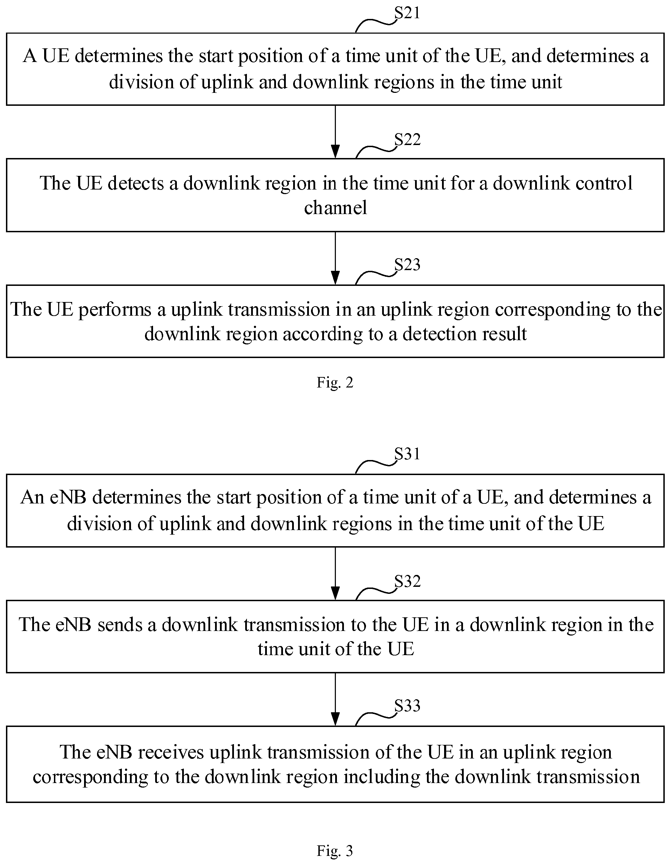

As illustrated in Fig. 2, an embodiment of the invention provides a method for transmitting data at the UE side, where the method includes the following steps.

In the step S21, a UE determines the start position of a time unit of the UE, and determines a division of uplink and downlink regions in the time unit.

In the step S22, the UE detects each downlink region in the time unit for a downlink control channel.

In the step S23, the UE performs uplink transmission in an uplink region corresponding to the downlink region according to a detection result.

In the embodiment of the invention, a UE determines the start position of a time unit of the UE, and determines a division of uplink and downlink regions in the time unit; detects each downlink region in the time unit for a downlink control channel; and performs uplink transmission in an uplink region corresponding to the downlink region according to a detection result. Since the UE transmits in the time unit specific to the UE, there may be different start positions of time units of different UEs, and also different numbers and lengths of uplink regions and/or downlink regions in the time units of the different UEs, thus supporting a flexible and varying division of resources.

In the embodiment of the invention, an uplink region in a time unit of a UE is a GP region or an uplink region in a time unit of another UE, thus improving the utilization ratio of system resources.

In the embodiment of the invention, a downlink region in a time unit of a UE is a GP region or a downlink region in a time unit of another UE, thus improving the utilization ratio of system resources.

Further to any one of the embodiments above, the UE determines the start position of the time unit of the UE in the step S21 as follows:
the UE receives first configuration signaling, and determines the start position of the time unit according to the first configuration signaling, where:
the first configuration signaling carries a time offset of the time unit relative to a preset reference time unit; or the first configuration signaling carries information about the start position of the time unit.

There are the following particular implementations.
1. If the first configuration signaling carries the information about the start position of the time unit, for example, the first configuration signaling carries the number of a symbol corresponding to the start position of the time unit of the UE, or the number of a mini-slot corresponding to the start position of the time unit of the UE, or the number of a slot corresponding to the start position of the time unit of the UE, or the number of a subframe corresponding to the start position of the time unit of the UE, then the UE may obtain the start position of the time unit of the UE directly from the first configuration signaling, where the symbol is the smallest time unit, the mini-slot is the smallest scheduling unit, and can include one or more symbols, the slot includes one or more min-slots, and the subframe includes one or more slots.
2. If the first configuration signaling carries a time offset of the time unit relative to the preset reference time unit, then the UE will determine the start position of the time unit of the UE according to the start position of the reference time unit, and the time offset carried in the first configuration signaling.

Optionally, the time offset carried in the first configuration signaling can be the number of symbols or mini-slots or slots or subframes of the offset of the start position of the time unit relative to the start position of the reference time unit.

Here, if the time offset is positive, then it will indicate that the start position of the time unit of the UE is arranged afterward relative to the start position of the reference time unit; if the time offset is negative, then it will indicate that the start position of the time unit of the UE is arranged ahead relative to the start position of the reference time unit; and if the time offset is zero, then it will indicate that the start position of the time unit of the UE is aligned with the start position of the reference time unit.

In the embodiment of the invention, the first configuration signaling is high-layer signaling, or configuration signaling transmitted in a downlink control channel, and can be broadcasted, or can be transmitted separately to each UE, where the downlink control channel can be transmitted in a UE-specific Search Space (USS), or can be transmitted in a Common Search Space (CSS). The first configuration signaling can be transmitted only once, or can be transmitted periodically.

Of course, the embodiment of the invention will not be limited to the start position of the time unit of the UE determined as described above, but the start position of the time unit of the UE may alternatively be determined otherwise, e.g., prescribed or predefined.

Further to any one of the embodiments above, the UE determines the division of uplink and downlink regions in the time unit in the step S21 in the following three possible implementations.

In a first implementation, the UE receives second configuration signaling, and determines the division of uplink and downlink regions in the time unit according to the second configuration signaling.

Optionally, the second configuration signaling is high-layer signaling, or configuration signaling transmitted in a downlink control channel, and can be broadcasted, or can be transmitted separately to each UE, where the downlink control channel can be transmitted in a USS, or can be transmitted in a CSS.

Optionally, the second configuration signaling can be transmitted only once, or can be transmitted at a preset periodicity. Furthermore different second configuration signaling may be transmitted in different periodicities. For example, the second configuration signaling carries information about the lengths and the positions of uplink regions in time units of a part of UEs, in a first preset periodicity; and the second configuration signaling carries information about the lengths and the positions of uplink regions in time units of the other UEs, in a second preset periodicity.

Optionally, the second configuration signaling and the first configuration signaling may be transmitted in the same configuration signaling, or may be transmitted differently.

In this implementation, there are the following four possible implementations of the second configuration signaling.

In an implementation a, the second configuration signaling carries information about the length and the position of at least one of an uplink region, a downlink region, and a GP region in the time unit of the UE.

Particularly, the information about the length and the position of at least one of the uplink region, the downlink region, and the GP region in the time unit of the UE is notified directly via the second configuration signaling.

In a possible implementation, the second configuration signaling carries information about the lengths and the positions of respective regions in the time unit of the UE. For example, if the time unit of the UE includes an uplink region and a downlink region, then the second configuration signaling will carry information about the lengths and the positions of the uplink region and the downlink region in the time unit of the UE, and if the time unit of the UE includes a plurality of uplink regions, and the lengths of the respective uplink regions are different, then the second configuration signaling will carry information about the lengths and the positions of the respective uplink regions in the time unit of the UE, e.g., the numbers of first symbols in the respective uplink regions, and the numbers of symbols in the respective uplink regions, or the numbers of first mini-slots in the respective uplink regions, and the numbers of mini-slots in the respective uplink regions, or the numbers of first slots in the respective uplink regions, and the numbers of slots in the respective uplink regions, or the numbers of first subframes in the respective uplink regions, and the numbers of subframes in the respective uplink regions; and the same will apply to downlink regions, so a repeated description thereof will be omitted here. The same will apply to the time unit of the UE including an uplink region, a downlink region, and a GP region, so a repeated description thereof will be omitted here.

In another possible implementation, the second configuration signaling carries information about the lengths and the positions of a part of regions in the time unit of the UE. Correspondingly the UE determines the lengths and the positions of the other regions according to the length and the start position of the time unit of the UE, and the information about the lengths and the positions of the part of the regions carried in the second configuration signaling.

For example, if the time unit of the UE includes an uplink region and a downlink region, then the second configuration signaling will carry the information about the length and the position of the uplink region in the time unit of the UE. Correspondingly the UE can determine the length and the position of the downlink region in the time unit according to the length and the start position of the time unit of the UE, and the length and the position of the uplink region in the time unit.

In another example, the time unit of the UE includes an uplink region, a downlink region, and a GP region, then the second configuration signaling will carry information about the lengths and the positions of the uplink region and the downlink region in the time unit of the UE, and correspondingly the UE can determine the length and the position of the GP region in the time unit according to the length and the start position of the time unit of the UE, and the lengths and the positions of the uplink region and the downlink region in the time unit; or the second configuration signaling will carry information about the lengths and the positions of the downlink region and the GP region in the time unit of the UE, and correspondingly the UE can determine the length and the position of the uplink region in the time unit according to the length and the start position of the time unit of the UE, and the lengths and the positions of the downlink region and the GP region in the time unit; etc.

In an implementation b, the second configuration signaling carries information representing an division pattern of an uplink region and/or a downlink region in the time unit, where the division pattern of an uplink region and/or a downlink region in the time unit is one of a plurality of preset division patterns of an uplink region and/or a downlink region in a time unit.

In this implementation, of the plurality of preset division patterns of an uplink region and/or a downlink region in a time unit, at least one of the start positions, the lengths, and the numbers of uplink regions in different division patterns are different, and/or at least one of the start positions, the lengths, and the numbers of downlink regions in different division patterns are different.

In this implementation, the second configuration signaling carries the information representing the division pattern of an uplink region and/or a downlink region in the time unit of the UE as the index of the division pattern of an uplink region and/or a downlink region. Correspondingly if the second configuration signaling carries the index of an division pattern of an uplink region in the time unit of the UE, then the UE will determine the corresponding division pattern of an uplink region from a preset set of division patterns of an uplink region in a time unit according to the index, and thus determine the length and/or the position of an uplink region in the time unit of the UE; if the second configuration signaling carries the index of an division pattern of a downlink region in the time unit of the UE, then the UE will determine the corresponding division pattern of a downlink region from a preset set of division patterns of a downlink region in a time unit according to the index, and thus determine the length and/or the position of a downlink region in the time unit of the UE; and if the second configuration signaling carries the index of an division pattern of an uplink region and a downlink region in the time unit of the UE, then the UE will determine the corresponding division pattern of an uplink region and a downlink region from a preset set of division patterns of an uplink region and a downlink region in a time unit according to the index, and thus determine the lengths and/or the positions of an uplink region and a downlink region in the time unit of the UE.

In an implementation c, the second configuration signaling carries information about the start position or the end position of a downlink region in the time unit of the UE.

In this implementation, the UE can obtain the start position or the end position of the downlink region in the time unit of the UE directly from the second configuration signaling, where if the second configuration signaling carries information about the start position of the downlink region in the time unit of the UE, then the UE can detect a downlink control channel starting with the start position, thus reducing the number of blind detections; and if the second configuration signaling carries information about the end position of the downlink region in the time unit of the UE, then the UE will detect all the regions before the end position blindly for a downlink control channel to determine the start position of the downlink control channel.

In this implementation, the UE can obtain the length of the downlink region in the time unit of the UE otherwise, e.g., through energy detection, or from other configuration signaling.

In an implementation d, the second configuration signaling carries information about the start position or the end position of an uplink region in the time unit.

In a second implementation, the UE determines an uplink region in the time unit according to uplink scheduling signaling.

For example, when the UE receives a downlink control channel with an uplink DCI format by detecting a downlink region in the time unit of the UE for a downlink control channel, the UE determines an uplink region in which an uplink shared channel scheduled by the downlink control channel is transmitted, according to predefined uplink scheduling timing, and/or a scheduling timing adjustment and/or a time position notified in the downlink control channel, as an uplink region of the UE in a time unit.

In a third implementation, the UE determines an uplink region carrying Acknowledgement (ACK)/Negative Acknowledgement (NACK) for downlink transmission according to a feedback position of the ACK/NACK.

By way of an example, the UE can determine a feedback position of ACK/NACK for downlink transmission according to a prescribed feedback delay, and/or a feedback delay adjustment and/or a feedback time position indicated in a downlink control channel corresponding to the downlink transmission for which the ACK/NACK is to be fed back, and for example, the feedback position of the ACK/NACK for the downlink transmission is n+T1, where n represents the number of a region including the downlink transmission, and T1 is a preset feedback delay; and for example, T1 is represented as k*a first Transmission Time Interval (TTI) length, or k*the first TTI length+T2, where the first TTI length can be a TTI length of uplink transmission, or of course, another TTI length thereof will not be precluded, e.g., a TTI length of downlink transmission; the value of k may be predefined, or notified in the downlink control channel; the value of T2 is determined as notified in the downlink control channel, represents an adjustment to a feedback delay, and can be represented directly as a particular value of a length of time, or can be represented as m*the first TTI length. The feedback position of the ACK/NACK of the downlink transmission can be determined as defined above, and a time position of the feedback position of the ACK/NACK can be determined as an uplink region.

Further to any one of the embodiments above, the UE performs uplink transmission in the uplink region corresponding to the downlink region according to the detection result in the step S23 in the following three possible implementations.

In a first implementation, if a downlink control channel with an uplink Downlink Control Information (DCI) format is detected, then the UE will transmit an uplink shared channel in an uplink region corresponding to a downlink region including the downlink control channel.

In this implementation, the uplink region corresponding to the downlink region is particularly:
a predefined or pre-configured uplink region in the same time unit as the downlink region including the downlink control channel; or
a predefined or pre-configured uplink region in a time unit after the time unit including the downlink region including the downlink control channel; or
an uplink region determined according to an indicating field in the downlink control channel.

In a second implementation, if a downlink control channel with a downlink DCI format, indicating a downlink Semi-Persistent Scheduling (SPS) resource release is detected, then the UE will feed back ACK/NACK in an uplink region corresponding to a downlink region including the downlink control channel.

In this implementation, the uplink region corresponding to the downlink region is particularly:
a predefined or pre-configured uplink region in the same time unit as the downlink region including the downlink control channel; or
an uplink region determined according to an indicating field in the downlink control channel; or
an uplink region spaced from the end of the downlink region including the downlink control channel by a preset length of time after the end of the downlink region.

In a third implementation, if a downlink shared channel is detected, then the UE will feed back ACK/NACK in an uplink region corresponding to a downlink region including the downlink shared channel.

In this implementation, the uplink region corresponding to the downlink region is particularly: a predefined or pre-configured uplink region in the same time unit as the downlink region including the downlink shared channel; or an uplink region determined according to an indicating field in scheduling signaling of the downlink shared channel; or an uplink region spaced from the end of the downlink region including the downlink shared channel by a preset length of time after the end of the downlink region.

Particularly, if the downlink shared channel is a dynamically scheduled physical downlink shared channel, then the scheduling signaling thereof will be a physical downlink control channel corresponding to the physical downlink shared channel; and if the downlink shared channel is an SPS physical downlink shared channel, then the scheduling signaling thereof will be a physical downlink control channel indicating the SPS resource to be activated.

Based upon the same inventive idea, as illustrated in Fig. 3, an embodiment of the invention provides a method for transmitting data at the eNB side, where a repeated description of the same components of the eNB side as the UE side will be omitted here, and the method includes the following steps.

In the step S31, an eNB determines the start position of a time unit of a UE, and determines a division of uplink and downlink regions in the time unit of the UE.

In the step S32, the eNB sends downlink transmission to the UE in a downlink region in the time unit of the UE.

In the step S33, the eNB receives uplink transmission of the UE in an uplink region corresponding to the downlink region including the downlink transmission.

Optionally, after the eNB determines the start position of the time unit of the UE, the method further includes:
the eNB notifies the UE of the start position via first configuration signaling, where:
the first configuration signaling carries a time offset of the time unit of the UE relative to a preset reference time unit; or
the first configuration signaling carries information about the start position of the time unit of the UE.

Optionally, the eNB configures UEs at the edges of cells with a fixed start position of time unit via the first configuration signaling, and the fixed start position of time unit is a predefined or prescribed start position which is the same for all the cells, thus avoiding mutual interference between UEs at the edges of the different cells; or
the eNB configures UEs at the centers of cells with the same or different start positions of time units via the first configuration signaling.

In a preferable implementation, the eNB configures the UEs at the centers of the cells with different start positions of time units via the first configuration signaling.

Further to any one of the embodiments above, after the eNB determines the division of uplink and downlink regions in the time unit of the UE, the method further includes:
the eNB notifies the UE of the division of uplink and downlink regions in the time unit of the UE via second configuration signaling, where:
the second configuration signaling carries information about the length and the position of at least one of an uplink region, a downlink region, or a GP region in the time unit; or
the second configuration signaling carries information representing an division pattern of an uplink region and/or a downlink region in the time unit, where the division pattern of an uplink region and/or a downlink region in the time unit is one of a plurality of preset division patterns of an uplink region and/or a downlink region in a time unit; or
the second configuration signaling carries information about the start position or the end position of a downlink region in the time unit of the UE; or
the second configuration signaling carries information about the start position or the end position of an uplink region in the time unit of the UE.

Further to any one of the embodiments above, the eNB determines the start position of the time unit of the UE, and determines the division of uplink and downlink regions in the time unit of the UE particularly as follows:
The eNB determines a downlink region in a time unit of the UE as a GP region or a downlink region in a time unit of another UE; and/or
The eNB determines an uplink region in a time unit of the UE as a GP region or an uplink region in a time unit of another UE.

In a preferable implementation, the eNB determines a downlink region in a time unit of the UE as a GP region or a downlink region in a time unit of another UE, thus improving the utilization ratio of system resources;
and/or
the eNB determines an uplink region in a time unit of the UE as a GP region or an uplink region in a time unit of another UE, thus improving the utilization ratio of system resources.

In the embodiment of the invention, optionally the eNB configures start positions of time units of different UEs, and divisions of uplink and downlink regions in the time units separately, the numbers and/or the lengths of downlink regions and uplink regions in one time units of the different UEs may or may not be the same.

By way of an example, the eNB can pre-group the UEs into A groups, and there may be the same start position of, and division of uplink and downlink regions in, time units of UEs in each group; or there may be different start positions of time units of UEs in different groups; and divisions of uplink and downlink regions in time units of UEs in different groups may be configured separately, and may or may not be the same.

Further to any one of the embodiments above, in the step S33 the eNB receives the uplink transmission of the UE in the uplink region corresponding to the downlink region including the downlink transmission as follows:
if the downlink transmission is a downlink control channel with a downlink DCI format, indicating a downlink SPS resource release, then the eNB will receive ACK/NACK feedback for the downlink control channel in an uplink region corresponding to a downlink region including the downlink control channel; or
if the downlink transmission is a downlink shared channel, then the eNB will receive ACK/NACK feedback for the downlink shared channel in an uplink region corresponding to a downlink region including the downlink shared channel; or
if the downlink transmission is a downlink control channel with an uplink DCI format, then the eNB will receive an uplink shared channel corresponding to the downlink control channel in an uplink region corresponding to a downlink region including the downlink control channel.

Here, if the downlink transmission is a downlink control channel with a downlink DCI format, indicating a downlink SPS resource release, then the uplink region corresponding to the downlink region including the downlink transmission will be: a predefined or pre-configured uplink region in the same time unit as the downlink region including the downlink control channel; or an uplink region indicated in an indicating field in the downlink control channel; or an uplink region spaced from the end of the downlink region including the downlink control channel by a preset length of time after the end of the downlink region;
or
if the downlink transmission is a downlink shared channel, then the uplink region corresponding to the downlink region including the downlink transmission will be: a predefined or pre-configured uplink region in the same time unit as the downlink region including the downlink shared channel; or an uplink region indicated in an indicating field in scheduling signaling of the downlink shared channel; or an uplink region spaced from the end of the downlink region including the downlink shared channel by a preset length of time after the end of the downlink region;
   or
if the downlink transmission is a downlink control channel in an uplink DCI format, then the uplink region corresponding to the downlink region including the downlink transmission will be: a predefined or pre-configured uplink region in the same time unit as the downlink region including the downlink control channel; or a predefined or pre-configured uplink region in a time unit after the time unit including the downlink region including the downlink control channel; or an uplink region indicated in an indicating field in the downlink control channel.

A method for transmitting data according to an embodiment of the invention will be described below in details in connection with a particular embodiment thereof.

In a first embodiment, for example, a time unit is a slot, where a slit includes seven OFDM symbols, and a subframe includes two slots. Of course, alternatively a time unit with another length can be defined in the embodiment of the invention similarly thereto, so a repeated description thereof will be omitted here.

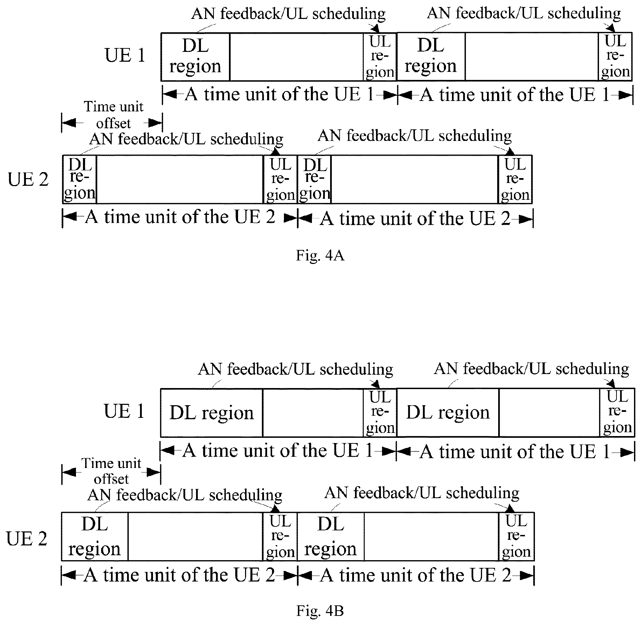

Operations at the eNB side:
1) An eNB determines the start position of a time unit of a UE 1 as the start position of a reference time unit, determines the start position of a time unit of a UE 2 to be offset ahead relative to the start position of the time unit of the UE 1 by A OFDM symbols;
2) The eNB decides to divide a time unit of the UE1 into one DL region and one UL region, and there is a GP region (which can also be referred to as a blank region) between the DL region and the UL region that is a reserved region determined to satisfy a Timing Advance (TA) demand in the UL, a switching period of time from the DL to the UL, etc., possibly taking into account interference between adjacent cells, and other factors; and alike the eNB also decides to divide a time unit of the UE2 into one DL region and one UL region, where since the start position is offset, the DL region and the UL region of the UE1 overlap in time with the GP region of the UE2, and the DL and UL regions of the UE2 overlap in time with the GP region of the UE1, so that the eNB side can schedule data to be transmitted in any one period of time, thus improving the utilization ratio of system resources while avoiding interference between the uplink and the downlink, as illustrated in Fig. 4A. Of course, if no TA or switching period of time or anti-interference is required, then a GP region may alternatively be arranged only as needed for a processing delay, as illustrated in Fig. 4B. At this time, the time unit is offset so that a downlink region of the UE 1 in a time unit overlaps in time with a downlink region or a GP region of the UE 2, and an uplink region of the UE 1 in a time unit overlaps in time with an uplink region or a GP region of the UE 2; and the same will apply to the UE 2, so that a plurality of UEs can operate concurrently without any interference between the uplink and the downlink of the UEs.

In this embodiment, a correspondence relationship between a DL region of a UE in a time unit, and a UL region of the UE in the time unit can be predefined or pre-configured directly, and for the UE 1 and the UE 2, for example, a DL region in a time unit is predefined or pre-configured to schedule uplink transmission in an UL region in the time unit, where uplink transmission in the UL region may occupy only a part of OFDM or SC-FDMA symbols or a part of mini-slots in the UL region, so a plurality of uplink shared channels of the same or different UEs can be transmitted in a UL region in a TDM mode, or uplink transmission in the UL region may occupy the length of the entire UL region.

ACK/NACK for downlink transmission in a DL region in a time unit is fed back in a UL region in the time unit, where downlink transmission in the DL region may occupy only a part of OFDM symbols or a part of mini-slots in the DL region, so a plurality of downlink transmission instances of the same or different UEs can be transmitted in a DL region in a TDM mode, or downlink transmission in the DL region may occupy the length of the entire DL region; and an uplink channel carrying ACK/NACK feedback information for downlink transmission may occupy only a part of OFDM or SC-OFDM symbols or a part of mini-slots in the UL region, so a plurality of uplink channels, carrying ACK/NACK, of the same or different UEs can be transmitted in a UL region in a TDM mode, or the uplink channel may occupy the length of the entire UL region, as illustrated in Fig. 4A and Fig. 4B.

In this embodiment, the eNB to schedule the UE 1 transmits a downlink control channel to the UE 1 in a downlink control channel search space in a DL region in a time unit of the UE 1 to schedule the UE 1 to receive a downlink shared channel in the DL region, and/or to transmit an uplink shared channel in a UL region in the time unit of the UE 1; and the eNB to schedule the UE 2 transmits a downlink control channel to the UE 2 in a downlink control channel search space in a DL region in a time unit of the UE 2 to schedule the UE 2 to receive a downlink shared channel in the DL region, and/or to transmit an uplink shared channel in a UL region in the time unit of the UE 2.

Correspondingly the UE 1 and the UE 2 determine the start position of a time unit thereof, and determine a division of DL and UL regions in the time unit, respectively according to configuration information, and detect a DL region in a time unit blindly for a downlink control channel. When a downlink control channel thereof in a downlink DCI format is detected, they receive a corresponding downlink shared channel in the DL region, generate ACK/NACK feedback information (i.e., "AN" feedback) for the downlink shared channel, and make ACK/NACK feedback in a UL region corresponding to the DL region, that is, the UE 1 makes ACK/NACK feedback in a UL region in the time unit of the UE 1, and the UE 2 makes ACK/NACK feedback in a UL region in the time unit of the UE 2; and when a downlink control channel thereof in an uplink DCI format is detected, they transmit a corresponding uplink shared channel in a UL region corresponding to the DL region, that is, the UE 1 transmits a corresponding uplink shared channel in a UL region in the time unit of the UE 1, and the UE 2 transmits a corresponding uplink shared channel in a UL region in the time unit of the UE 2.

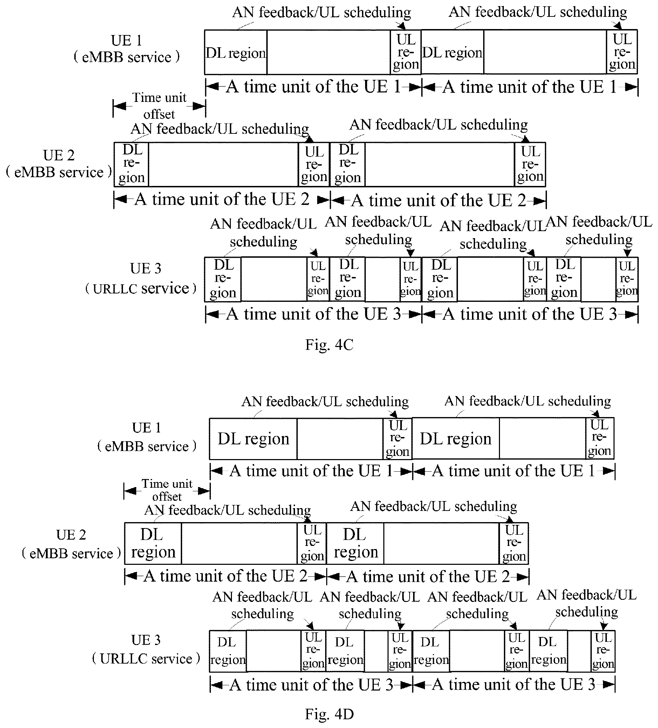

In this embodiment, if there is data transmission of different types of services, e.g., an eMBB service of the UE 1 and the UE 2, and a URLLC service of a UE 3, then different time unit patterns may be defined for the UEs with the different types of services, where for the UE with the URLLC service, more DL regions and UL regions than the eMBB service can be defined in a time unit, and for example, two DL regions and two UL regions are defined, where the first DL region corresponds to the first UL region, and the second DL region corresponds to the second UL region, as illustrated in Fig. 4C and Fig. 4D; and at this time, a time unit of the UE 3 may be aligned with that of the UE 1, a DL region of the UE 3 in a time unit overlaps in time with a DL region or a GP region of another UE, and a UL region of the UE 3 in a time unit overlaps in time with a UL region or a GP region of another UE, so that a plurality of UEs can operate concurrently without any interference between the uplink and the downlink of the UEs. Processing thereof will be similar to that as described above, so a repeated description thereof will be omitted here.

In this embodiment, for the eMBB service, one DL region and one UL region are defined in a time unit as described above only by way of an example, but of course, more than one DL region and more than one UL region can alternatively be defined in a time unit; and if a plurality of DL regions, and a plurality of UL regions are defined in a time unit, then a correspondence relationship between the plurality of DL regions, and the plurality of UL regions will be predefined or pre-configured; and for example, two DL regions and two UL regions are defined in a time unit, so feedback and scheduling correspondence relationships similar to those of the URLLC service in Fig.4D may be defined.

The processing flows of the methods above can be performed in software program, the software program can be stored in a storage medium, and when the stored software program is invoked, it can perform the steps in the methods above.

Based upon the same inventive idea, an embodiment of the invention further provides a UE, and since the UE addresses the problem under a similar principle to the method as illustrated in Fig. 2, reference can be made to the implementation of the method for an implementation of the UE, and a repeated description thereof will be omitted here.

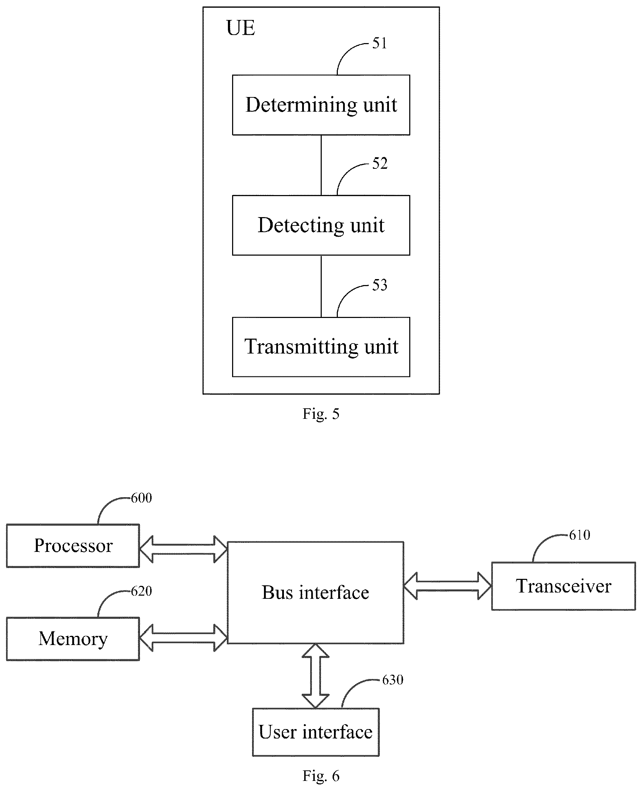

Fig. 5 illustrates a UE according to an embodiment of the invention, where the UE includes:
a determining unit 51 is configured to determine the start position of a time unit of the UE, and to determine a division of uplink and downlink regions in the time unit;
a detecting unit 52 is configured to detect each downlink region in the time unit for a downlink control channel; and
a transmitting unit 53 is configured to perform uplink transmission in an uplink region corresponding to the downlink region according to a detection result of the detecting unit.

Optionally, the determining unit 51 is configured:
to receive first configuration signaling, and to determine the start position of the time unit according to the first configuration signaling, where:
the first configuration signaling carries a time offset of the time unit relative to a preset reference time unit; or the first configuration signaling carries information about the start position of the time unit.

Optionally, the determining unit 51 is configured:
to receive second configuration signaling, and to determine the division of uplink and downlink regions in the time unit according to the second configuration signaling; or
to determine an uplink region in the time unit according to uplink scheduling signaling; or
to determine an uplink region carrying ACK/NACK for downlink transmission according to a feedback position of the ACK/NACK;
where the second configuration signaling carries information about the length and the position of at least one of an uplink region, a downlink region, and a GP region in the time unit; or
the second configuration signaling carries information representing an division pattern of an uplink region and/or a downlink region in the time unit, where the division pattern of an uplink region and/or a downlink region in the time unit is one of a plurality of preset division patterns of an uplink region and/or a downlink region in a time unit; or
the second configuration signaling carries information about the start position or the end position of a downlink region in the time unit; or
the second configuration signaling carries information about the start position or the end position of an uplink region in the time unit.

Optionally, the transmitting unit 53 is configured:
if a downlink control channel with an uplink DCI format is detected, to transmit an uplink shared channel in an uplink region corresponding to a downlink region including the downlink control channel; or
if a downlink control channel with a downlink DCI format, indicating a downlink SPS resource release is detected, to feed back ACK/NACK in an uplink region corresponding to a downlink region including the downlink control channel; or
if a downlink shared channel is detected, to feed back ACK/NACK in an uplink region corresponding to a downlink region including the downlink shared channel.

Here, if a downlink control channel with a downlink DCI format indicating a downlink SPS resource release is detected, then the uplink region corresponding to the downlink region will be: a predefined or pre-configured uplink region in the same time unit as the downlink region including the downlink control channel; or an uplink region determined according to an indicating field in the downlink control channel; or an uplink region spaced from the end of the downlink region including the downlink control channel by a preset length of time after the end of the downlink region;
or
if a downlink shared channel is detected, then the uplink region corresponding to the downlink region will be: a predefined or pre-configured uplink region in the same time unit as the downlink region including the downlink shared channel; or an uplink region determined according to an indicating field in scheduling signaling of the downlink shared channel; or an uplink region spaced from the end of the downlink region including the downlink shared channel by a preset length of time after the end of the downlink region;
   or
if a downlink control channel with an uplink DCI format is detected, then the uplink region corresponding to the downlink region will be: a predefined or pre-configured uplink region in the same time unit as the downlink region including the downlink control channel; or a predefined or pre-configured uplink region in a time unit after the time unit including the downlink region including the downlink control channel; or an uplink region determined according to an indicating field in the downlink control channel.

Fig. 6 illustrates another UE according to an embodiment of the invention, where the UE includes: a transceiver 610, and at least one processor 600 connected with the transceiver, where:
the processor 600 is configured to read and execute program in a memory 620:
to determine the start position of a time unit of the UE, and to determine a division of uplink and downlink regions in the time unit; to detect each downlink region in the time unit for a downlink control channel; and to perform uplink transmission in an uplink region corresponding to the downlink region through the transceiver 610 according to a detection result; and
the transceiver 610 is configured to receive and transmit data under the control of the processor 600.

Here, in Fig. 6, the bus architecture can include any number of interconnecting buses and bridges to particularly link together various circuits including one or more processors represented by the processor 600, and one or more memories represented by the memory 620. The bus architecture can further link together various other circuits, e.g., a peripheral device, a manostat, a power management circuit, etc., all of which are well known in the art, so a further description thereof will be omitted in this context. The bus interface serves as an interface. The transceiver 610 can be an element, or can be a number of elements, e.g., a number of transmitters and receivers, which are units for communication with various other devices over a transmission medium. For different user equipments, the user interface 630 can also be an interface via which devices are connected internally and externally as needed, and the connected devices include but will not be limited to a keypad, a monitor, a speaker, a microphone, a joystick, etc. The processor 600 is responsible for managing the bus architecture and performing normal processes, and can further provide various functions of timing, a peripheral interface, voltage regulation, power source management, and other control functions, and the memory 620 can store data for use by the processor 600 in performing the operations.

Optionally, the processor 600 can be a Central Processing Unit (CPU), an Application-Specific Integrated Circuit (ASIC), a Field-Programmable Gate Array (FPGA), or a Complex Programmable Logic Device (CPLD).

Optionally, the processor 600 is configured to read and execute the program in the memory 620:
to receive first configuration signaling through the transceiver 610, and to determine the start position of the time unit according to the first configuration signaling, where:
the first configuration signaling carries a time offset of the time unit relative to a preset reference time unit; or the first configuration signaling carries information about the start position of the time unit.

Optionally, the processor 600 is configured to read and execute the program in the memory 620:
to receive second configuration signaling through the transceiver 610, and to determine the division of uplink and downlink regions in the time unit according to the second configuration signaling; or
to determine an uplink region in the time unit according to uplink scheduling signaling; or to determine an uplink region carrying ACK/NACK for downlink transmission according to a feedback position of the ACK/NACK;
where the second configuration signaling carries information about the length and the position of at least one of an uplink region, a downlink region, and a GP region in the time unit; or
the second configuration signaling carries information representing an division pattern of an uplink region and/or a downlink region in the time unit, where the division pattern of an uplink region and/or a downlink region in the time unit is one of a plurality of preset division patterns of an uplink region and/or a downlink region in a time unit; or
the second configuration signaling carries information about the start position or the end position of a downlink region in the time unit; or
the second configuration signaling carries information about the start position or the end position of an uplink region in the time unit.

Optionally, the processor 600 is configured to read and execute the program in the memory 620:
if a downlink control channel with an uplink DCI format is detected, to transmit an uplink shared channel in an uplink region corresponding to a downlink region including the downlink control channel through the transceiver 610; or
if a downlink control channel with a downlink DCI format, indicating a downlink SPS resource release is detected, to feed back ACK/NACK in an uplink region corresponding to a downlink region including the downlink control channel through the transceiver 610; or
if a downlink shared channel is detected, to feed back ACK/NACK in an uplink region corresponding to a downlink region including the downlink shared channel through the transceiver 610;
where if a downlink control channel with a downlink DCI format indicating a downlink SPS resource release is detected, then the uplink region corresponding to the downlink region will be: a predefined or pre-configured uplink region in the same time unit as the downlink region including the downlink control channel; or an uplink region determined according to an indicating field in the downlink control channel; or an uplink region spaced from the end of the downlink region including the downlink control channel by a preset length of time after the end of the downlink region;
   or
if a downlink shared channel is detected, then the uplink region corresponding to the downlink region will be: a predefined or pre-configured uplink region in the same time unit as the downlink region including the downlink shared channel; or an uplink region determined according to an indicating field in scheduling signaling of the downlink shared channel; or an uplink region spaced from the end of the downlink region including the downlink shared channel by a preset length of time after the end of the downlink region;
   or
if a downlink control channel with an uplink DCI format is detected, then the uplink region corresponding to the downlink region will be: a predefined or pre-configured uplink region in the same time unit as the downlink region including the downlink control channel; or a predefined or pre-configured uplink region in a time unit after the time unit including the downlink region including the downlink control channel; or an uplink region determined according to an indicating field in the downlink control channel.

Based upon the same inventive idea, an embodiment of the invention further provides an eNB, and since the eNB addresses the problem under a similar principle to the method as illustrated in Fig.3, reference can be made to the implementation of the method for an implementation of the eNB, and a repeated description thereof will be omitted here.

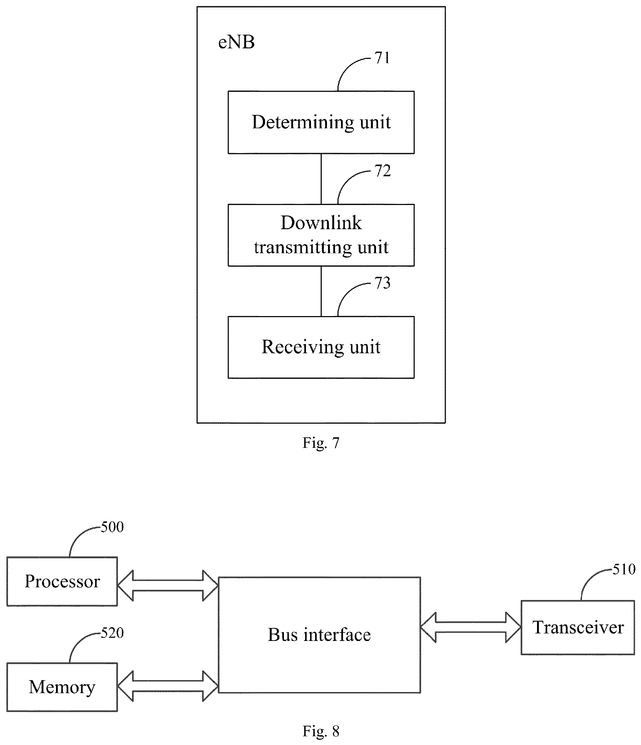

Fig. 7 illustrates an eNB according to an embodiment of the invention, where the eNB includes:
a determining unit 71 is configured to determine the start position of a time unit of a UE, and to determine a division of uplink and downlink regions in the time unit of the UE;
a downlink transmitting unit 72 is configured to send downlink transmission to the UE in a downlink region in the time unit of the UE; and
a receiving unit 73 is configured to receive uplink transmission of the UE in an uplink region corresponding to the downlink region including the downlink transmission.

Optionally, the determining unit 71 is further configured:
to notify the UE of the start position via first configuration signaling, where:
the first configuration signaling carries a time offset of the time unit of the UE relative to a preset reference time unit; or
the first configuration signaling carries information about the start position of the time unit of the UE.

Optionally, UEs at the edges of cells are configured with a fixed start position of time unit via the first configuration signaling, and the fixed start position of time unit is a predefined or prescribed start position; or
UEs at the centers of cells are configured with the same or different start positions of time units via the first configuration signaling.

Optionally, the determining unit 71 is further configured:
to notify the UE of the division of uplink and downlink regions in the time unit of the UE via second configuration signaling, where:
the second configuration signaling carries information about the length and the position of at least one of an uplink region, a downlink region, and a GP region in the time unit; or
the second configuration signaling carries information representing an division pattern of an uplink region and/or a downlink region in the time unit, where the division pattern of an uplink region and/or a downlink region in the time unit is one of a plurality of preset division patterns of an uplink region and/or a downlink region in a time unit; or
the second configuration signaling carries information about the start position or the end position of a downlink region in the time unit of the UE; or
the second configuration signaling carries information about the start position or the end position of an uplink region in the time unit of the UE.

Optionally, the determining unit 71 is configured:
to determine a downlink region in a time unit of the UE as a GP region or a downlink region in a time unit of another UE; and/or
to determine an uplink region in a time unit of the UE as a GP region or an uplink region in a time unit of another UE.

Optionally, the receiving unit 73 is configured:
if the downlink transmission is a downlink control channel with a downlink DCI format, indicating a downlink SPS resource release, to receive ACK/NACK feedback for the downlink control channel in an uplink region corresponding to a downlink region including the downlink control channel; or
if the downlink transmission is a downlink shared channel, to receive ACK/NACK feedback for the downlink shared channel in an uplink region corresponding to a downlink region including the downlink shared channel; or
if the downlink transmission is a downlink control channel with an uplink DCI format, to receive an uplink shared channel corresponding to the downlink control channel in an uplink region corresponding to a downlink region including the downlink control channel.

Here, if the downlink transmission is a downlink control channel with a downlink DCI format, indicating a downlink SPS resource release, then the uplink region corresponding to the downlink region including the downlink transmission will be: a predefined or pre-configured uplink region in the same time unit as the downlink region including the downlink control channel; or an uplink region indicated in an indicating field in the downlink control channel; or an uplink region spaced from the end of the downlink region including the downlink control channel by a preset length of time after the end of the downlink region;
or
if the downlink transmission is a downlink shared channel, then the uplink region corresponding to the downlink region including the downlink transmission will be: a predefined or pre-configured uplink region in the same time unit as the downlink region including the downlink shared channel; or an uplink region indicated in an indicating field in scheduling signaling of the downlink shared channel; or an uplink region spaced from the end of the downlink region including the downlink shared channel by a preset length of time after the end of the downlink region;
   or
if the downlink transmission is a downlink control channel with an uplink DCI format, then the uplink region corresponding to the downlink region including the downlink transmission will be: a predefined or pre-configured uplink region in the same time unit as the downlink region including the downlink control channel; or a predefined or pre-configured uplink region in a time unit after the time unit including the downlink region including the downlink control channel; or an uplink region indicated in an indicating field in the downlink control channel.

Fig. 8 illustrates another eNB according to an embodiment of the invention, where the UE includes: a transceiver 510, and at least one processor 500 connected with the transceiver 510, where:
the processor 500 is configured to read and execute program in a memory 520:
to determine the start position of a time unit of a UE, and to determine a division of uplink and downlink regions in the time unit of the UE; to send downlink transmission to the UE through the transceiver 510 in a downlink region in the time unit of the UE; and to receive uplink transmission of the UE through the transceiver 510 in an uplink region corresponding to the downlink region including the downlink transmission; and
the transceiver 510 is configured to receive and transmit data under the control of the processor 500.

Here, in Fig. 8, the bus architecture can include any number of interconnecting buses and bridges to particularly link together various circuits including one or more processors represented by the processor 500, and one or more memories represented by the memory 520. The bus architecture can further link together various other circuits, e.g., a peripheral device, a manostat, a power management circuit, etc., all of which are well known in the art, so a further description thereof will be omitted in this context. The bus interface serves as an interface. The transceiver 510 can be an element, or can be a number of elements, e.g., a number of transmitters and receivers, which are units for communication with various other devices over a transmission medium. The processor 500 is responsible for managing the bus architecture and performing normal processes, and can further provide various functions of timing, a peripheral interface, voltage regulation, power source management, and other control functions, and the memory 520 can store data for use by the processor 500 in performing the operations.

Optionally, the processor 500 can be a CPU, an ASIC, an FPGA, or a CPLD.

Optionally, the processor 500 is configured to read and execute the program in the memory 520:
to notify the UE of the start position via first configuration signaling, where:
the first configuration signaling carries a time offset of the time unit of the UE relative to a preset reference time unit; or
the first configuration signaling carries information about the start position of the time unit of the UE.

Optionally, UEs at the edges of cells are configured with a fixed start position of time unit via the first configuration signaling, and the fixed start position of time unit is a predefined or prescribed start position; or
UEs at the centers of cells are configured with the same or different start positions of time units via the first configuration signaling.

Optionally, the processor 500 is further configured to read and execute the program in the memory 520:
to notify the UE of the division of uplink and downlink regions in the time unit of the UE via second configuration signaling, where:
the second configuration signaling carries information about the length and the position of at least one of an uplink region, a downlink region, and a GP region in the time unit; or
the second configuration signaling carries information representing an division pattern of an uplink region and/or a downlink region in the time unit, where the division pattern of an uplink region and/or a downlink region in the time unit is one of a plurality of preset division patterns of an uplink region and/or a downlink region in a time unit; or
the second configuration signaling carries information about the start position or the end position of a downlink region in the time unit of the UE; or
the second configuration signaling carries information about the start position or the end position of an uplink region in the time unit of the UE.

Optionally, the processor 500 is configured to read and execute the program in the memory 520:
to determine a downlink region in a time unit of the UE as a GP region or a downlink region in a time unit of another UE; and/or
to determine an uplink region in a time unit of the UE as a GP region or an uplink region in a time unit of another UE.

Optionally the processor 500 is configured to read and execute the program in the memory 520:
if the downlink transmission is a downlink control channel with a downlink DCI format, indicating a downlink SPS resource release, to receive ACK/NACK feedback for the downlink control channel through the transceiver 510 in an uplink region corresponding to a downlink region including the downlink control channel; or
if the downlink transmission is a downlink shared channel, to receive ACK/NACK feedback for the downlink shared channel through the transceiver 510 in an uplink region corresponding to a downlink region including the downlink shared channel; or
if the downlink transmission is a downlink control channel with an uplink DCI format, to receive an uplink shared channel corresponding to the downlink control channel through the transceiver 510 in an uplink region corresponding to a downlink region including the downlink control channel.

Here, if the downlink transmission is a downlink control channel with a downlink DCI format, indicating a downlink SPS resource release, then the uplink region corresponding to the downlink region including the downlink transmission will be: a predefined or pre-configured uplink region in the same time unit as the downlink region including the downlink control channel; or an uplink region indicated in an indicating field in the downlink control channel; or an uplink region spaced from the end of the downlink region including the downlink control channel by a preset length of time after the end of the downlink region;
or
if the downlink transmission is a downlink shared channel, then the uplink region corresponding to the downlink region including the downlink transmission will be: a predefined or pre-configured uplink region in the same time unit as the downlink region including the downlink shared channel; or an uplink region indicated in an indicating field in scheduling signaling of the downlink shared channel; or an uplink region spaced from the end of the downlink region including the downlink shared channel by a preset length of time after the end of the downlink region;
   or
if the downlink transmission is a downlink control channel with an uplink DCI format, then the uplink region corresponding to the downlink region including the downlink transmission will be: a predefined or pre-configured uplink region in the same time unit as the downlink region including the downlink control channel; or a predefined or pre-configured uplink region in a time unit after the time unit including the downlink region including the downlink control channel; or an uplink region indicated in an indicating field in the downlink control channel.

In the embodiments of the invention, the eNB configures each UE with a time unit specific to the UE so that each UE transmits in the time unit specific to the UE, there may be different start positions of the time units of the different UEs, and there may be also different numbers and lengths of uplink regions and/or downlink regions in the time units of the different UEs, so that a flexible and varying division of resources can be supported.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

## Claims

1. A method for transmitting data, the method comprising
determining, by a UE, a start position of a time unit of the UE, and determining a division of uplink and downlink regions in the time unit, wherein the time unit is one slot;
detecting, by the UE, a downlink control channel in the downlink region of the time unit; and
performing, by the UE, a uplink transmission in an uplink region corresponding to the downlink region according to a detection result;
**characterized by** determining, by the UE, the division of uplink and downlink regions in the time unit comprises one of following processes:
process 1: determining, by the UE, an uplink region in the time unit according to a uplink scheduling signaling, comprising: when the UE receives a downlink control channel with an uplink DCI format by detecting a downlink region in the time unit for the downlink control channel, the UE determines an uplink region in which an uplink shared channel scheduled by the downlink control channel is transmitted, according to predefined uplink scheduling timing, and/or a scheduling timing adjustment and/or a time position notified in the downlink control channel, as an uplink region of the UE in the time unit;
or
process 2: determining, by the UE, an uplink region carrying Acknowledgement, ACK/Negative Acknowledgement, NACK for a downlink transmission according to a feedback position of the ACK/NACK;
wherein performing, by the UE, the uplink transmission in the uplink region corresponding to the downlink region according to the detection result comprises one of the following schemes:
scheme 1: if a downlink control channel with an uplink Downlink Control Information, DCI, format is detected, then transmitting, by the UE, an uplink shared channel in an uplink region corresponding to a downlink region comprising the downlink control channel, wherein the uplink region corresponding to the downlink region is one of followings: a predefined or pre-configured uplink region in a same time unit as the downlink region comprising the downlink control channel, a predefined or pre-configured uplink region in a time unit after the time unit comprising the downlink region comprising the downlink channel, an uplink region determined according to an indicating field in the downlink control channel;
scheme 2: if a downlink control channel with a downlink DCI format is detected, then feeding back, by the UE, ACK/NACK in an uplink region corresponding to a downlink region comprising the downlink control channel, wherein the downlink control channel is used for indicating a downlink Semi-Persistent Scheduling, SPS, resource release, wherein the uplink region corresponding to the downlink region is one of followings: a predefined or pre-configured uplink region in a same time unit as the downlink region comprising the downlink control channel, an uplink region determined according to an indicating field in the downlink control channel, an uplink region spaced from an end of the downlink region comprising the downlink control channel by a preset length of time after the end of the downlink region;
scheme 3: if a downlink shared channel is detected, then feeding back, by the UE, ACK/NACK in an uplink region corresponding to a downlink region comprising the downlink shared channel, wherein the uplink region corresponding to the downlink region is one of followings: a predefined or pre-configured uplink region in a same time unit as the downlink region comprising the downlink shared channel, an uplink region determined according to an indicating field in scheduling signaling of the downlink shared channel, an uplink region spaced from an end of the downlink region comprising the downlink shared channel by a preset length of time after the end of the downlink region.

2. The method according to claim 1, wherein determining, by the UE, the start position of the time unit of the UE comprises:
receiving, by the UE, a first configuration signaling, and determining the start position of the time unit according to the first configuration signaling, wherein:
the first configuration signaling carries a time offset of the time unit relative to a preset reference time unit; or the first configuration signaling carries information about the start position of the time unit.

3. The method according to any one of claims 1 to 2, wherein further comprises at least one of followings:
quantities of downlink regions in time units for transmitting different services are same or different;
quantities of uplink regions in time units for transmitting different services are same or different;
if the time unit comprises at least two downlink regions, lengths of respective downlink regions are same or different;
if the time unit comprises at least two uplink regions, lengths of respective uplink regions are same or different.

4. A method for transmitting data, the method comprising
determining, by an eNB, a start position of a time unit of a UE, and determining a division of uplink and downlink regions in the time unit of the UE, wherein the time unit is one slot;
sending, by the eNB, a downlink transmission to the UE in a downlink region in the time unit of the UE; and
receiving, by the eNB, a uplink transmission of the UE in an uplink region corresponding to the downlink region comprising the downlink transmission;
**characterized by** receiving, by the eNB, the uplink transmission of the UE in the uplink region corresponding to the downlink region comprising the downlink transmission comprises one of following schemes:
scheme 1: if the downlink transmission is a downlink control channel with a downlink DCI format, receiving, by the eNB, ACK/NACK feedback for the downlink control channel in an uplink region corresponding to a downlink region comprising the downlink control channel, wherein the downlink transmission is used for indicating a downlink SPS resource release, wherein the uplink region corresponding to the downlink region coinprising the downlink transmission is one of followings: a predefined or pre-configured uplink region in the same time unit as the downlink region comprising the downlink control channel, an uplink region indicated in an indicating field in the downlink control channel, an uplink region spaced from the end of the downlink region comprising the downlink control channel by a preset length of time after the end of the downlink region;
scheme 2: if the downlink transmission is a downlink shared channel, receiving, by the eNB, ACK/NACK feedback for the downlink shared channel in an uplink region corresponding to a downlink region comprising the downlink shared channel, wherein the uplink region corresponding to the downlink region comprising the downlink transmission is one of followings: a predefined or pre-configured uplink region in the same time unit as the downlink region comprising the downlink shared channel, an uplink region indicated in an indicating field in scheduling signaling of the downlink shared channel, an uplink region spaced from the end of the downlink region comprising the downlink shared channel by a preset length of time after the end of the downlink region;
scheme 3: if the downlink transmission is a downlink control channel with an uplink DCI format, receiving, by the eNB, an uplink shared channel corresponding to the downlink control channel in an uplink region corresponding to a downlink region comprising the downlink control channel, wherein the uplink region corresponding to the downlink region comprising the downlink transmission is one of followings: a predefined or pre-configured uplink region in the same time unit as the downlink region comprising the downlink control channel, a predefined or pre-configured uplink region in a time unit after the time unit comprising the downlink region comprising the downlink control channel, an uplink region indicated in an indicating field in the downlink control channel.

5. The method according to claim 4, wherein after the eNB determines the start position of the time unit of the UE, the method further comprises:
notifying, by the eNB, the UE of the start position via a first configuration signaling, wherein:
the first configuration signaling carries a time offset of the time unit of the UE relative to a preset reference time unit; or
the first configuration signaling carries information about the start position of the time unit of the UE.

6. The method according to claim 4, wherein configuring, by the eNB, UEs at edges of cells with a fixed start position of time unit via the first configuration signaling, and the fixed start position of time unit is a predefined or prescribed start position; or
configuring, by the eNB, UEs at centers of cells with same or different start positions of time units via the first configuration signaling.

7. The method according to claim 4, wherein determining, by the eNB, the start position of the time unit of the UE, and determining the division of uplink and downlink regions in the time unit of the UE comprises:
determining, by the eNB, a downlink region in the time unit of the UE as a GP region or a downlink region in a time unit of another UE; and/or
determining, by the eNB, an uplink region in the time unit of the UE as a GP region or an uplink region in a time unit of another UE.

8. The method according to any one of claims 5 to 7, wherein further comprises at least one of followings:
quantities of downlink regions in time units for transmitting different services are same or different;
quantities of uplink regions in time units for transmitting different services are same or different;
if the time unit comprises at least two downlink regions, then the lengths of the respective downlink regions will be the same or different;
if the time unit comprises at least two uplink regions, then the lengths of the respective uplink regions will be the same or different.

9. A UE, comprising
a determining unit (51) configured to determine a start position of a time unit of the UE, and to determine a division of uplink and downlink regions in the time unit by one of following processes:
operation 1: determining an uplink region in the time unit according to a uplink scheduling signaling, comprising: when the UE receives a downlink control channel with an uplink DCI format by detecting a downlink region in the time unit for the downlink control channel, the UE determines an uplink region in which an uplink shared channel scheduled by the downlink control channel is transmitted, according to predefined uplink scheduling timing, and/or a scheduling timing adjustment and/or a time position notified in the downlink control channel, as an uplink region of the UE in a time unit;
or
operation 2: determining an uplink region carrying ACK/NACK for a downlink transmission according to a feedback position of the ACK/NACK;
wherein the time unit is one slot;
a detecting unit (52) configured to detect a downlink control channel with the downlink region of the time unit; and
a transmitting unit (53) configured to perform a uplink transmission in an uplink region corresponding to the downlink region according to a detection result of the detecting unit;
wherein the transmitting unit (53) is configured to perform one of followings:
if a downlink control channel with an uplink DCI format is detected, to transmit an uplink shared channel in an uplink region corresponding to a downlink region comprising the downlink control channel, wherein the uplink region corresponding to the downlink region is one of followings: a predefined or pre-configured uplink region in the same time unit as the downlink region comprising the downlink control channel, an uplink region determined according to an indicating field in the downlink control channel, an uplink region spaced from the end of the downlink region comprising the downlink control channel by a preset length of time after the end of the downlink region;
if a downlink control channel with a downlink DCI format is detected, to feed back ACK/NACK in an uplink region corresponding to a downlink region comprising the downlink control channel, wherein the downlink control channel is used for indicating a downlink SPS resource release, wherein the uplink region corresponding to the downlink region is one of followings: a predefined or pre-configured uplink region in the same time unit as the downlink region comprising the downlink shared channel an uplink region determined according to an indicating field in scheduling signaling of the downlink shared channel an uplink region spaced from the end of the downlink region comprising the downlink shared channel by a preset length of time after the end of the downlink region; and
if a downlink shared channel is detected, to feed back ACK/NACK in an uplink region corresponding to a downlink region comprising the downlink shared channel, wherein the uplink region corresponding to the downlink region is one of followings: a predefined or pre-configured uplink region in the same time unit as the downlink region comprising the downlink control channel, a predefined or pre-configured uplink region in a time unit after the time unit comprising the downlink region comprising the downlink control channel, an uplink region determined according to an indicating field in the downlink control channel.

10. The UE according to claim 9, wherein the determining unit (51) is configured to determine a start position of time unit of the UE, and to determine a division of uplink and downlink regions in the time unit by:
receiving first configuration signaling, and determining the start position of the time unit according to the first configuration signaling, wherein:
the first configuration signaling carries a time offset of the time unit relative to a preset reference time unit; or the first configuration signaling carries information about the start position of the time unit.

11. An eNB, comprising:
a determining unit (71) configured to determine a start position of time unit of a UE, and to determine a division of uplink and downlink regions in the time unit of the UE, wherein the time unit is one slot;
a downlink transmitting unit (72) configured to send a downlink transmission to the UE in a downlink region in the time unit of the UE; and
a receiving unit (73) configured to receive a uplink transmission of the UE in an uplink region corresponding to the downlink region comprising the downlink transmission;
wherein the receiving unit (73) is configured to perform one of followings:
if the downlink transmission is a downlink control channel with a downlink DCI format, to receive ACK/NACK feedback for the downlink control channel in an uplink region corresponding to a downlink region comprising the downlink control channel, wherein the downlink transmission is used for indicating a downlink SPS resource release, wherein the uplink region corresponding to the downlink region is one of followings: a predefined or pre-configured uplink region in the same time unit as the downlink region comprising the downlink control channel, an uplink region indicated in an indicating field in the downlink control channel, an uplink region spaced from the end of the downlink region comprising the downlink control channel by a preset length of time after the end of the downlink region;
if the downlink transmission is a downlink shared channel, to receive ACK/NACK feedback for the downlink shared channel in an uplink region corresponding to a downlink region comprising the downlink shared channel, the uplink region corresponding to the downlink region is one of followings: a predefined or pre-configured uplink region in the same time unit as the downlink region comprising the downlink shared channel, an uplink region indicated in an indicating field in scheduling signaling of the downlink shared channel, an uplink region spaced from the end of the downlink region comprising the downlink shared channel by a preset length of time after the end of the downlink region; or
if the downlink transmission is a downlink control channel with an uplink DCI format, to receive an uplink shared channel corresponding to the downlink control channel in an uplink region corresponding to a downlink region comprising the downlink control channel, wherein the uplink region corresponding to the downlink region is one of followings: a predefined or pre-configured uplink region in the same time unit as the downlink region comprising the downlink control channel, a predefined or pre-configured uplink region in a time unit after the time unit comprising the downlink region comprising the downlink control channel, an uplink region indicated in an indicating field in the downlink control channel.

12. The eNB according to claim 11, wherein the determining unit (71) is further configured to perform at least one of following operations:
operation 1:
notifying the UE of the start position via a first configuration signaling, wherein:
the first configuration signaling carries a time offset of the time unit of the UE relative to a preset reference time unit; or
the first configuration signaling carries information about the start position of the time unit of the UE;
operation 2:
configuring UEs at edges of cells with a fixed start position of time unit via the first configuration signaling, and the fixed start position of time unit is a predefined or prescribed start position; or
configuring UEs at centers of cells with the same or different start positions of time units via the first configuration signaling.

13. The eNB according to claim 11, wherein the determining unit (71) is configured:
to determine a downlink region in the time unit of the UE as a GP region or a downlink region in a time unit of another UE; and/or
to determine an uplink region in the time unit of the UE as a GP region or an uplink region in a time unit of another UE

## Patentansprüche

1. Verfahren zum Übertragen von Daten, wobei das Verfahren Folgendes umfasst:
Bestimmen, durch ein UE, einer Startposition einer Zeiteinheit des UE, und Bestimmen einer Aufteilung von Uplink- und Downlink-Bereichen in der Zeiteinheit, wobei die Zeiteinheit ein Slot ist;
Erkennen, durch das UE, eines Downlink-Steuerkanals im Downlink-Bereich der Zeiteinheit; und
Durchführen, durch das UE, einer Uplink-Übertragung in einem Uplink-Bereich, der dem Downlink-Bereich gemäß einem Erkennungsergebnis entspricht;
**dadurch gekennzeichnet, dass**:
das Bestimmen, durch das UE, der Aufteilung von Uplink- und Downlink-Bereichen in der Zeiteinheit einen der folgenden Prozesse umfasst:
Prozess 1: Bestimmen, durch das UE, eines Uplink-Bereichs in der Zeiteinheit gemäß einer Uplink-Planungssignalisierung, Folgendes umfassend: wenn das UE einen Downlink-Steuerkanal mit einem Uplink-DCI-Format empfängt, indem ein Downlink-Bereich in der Zeiteinheit für den Downlink-Steuerkanal erkannt wird, bestimmt das UE einen Uplink-Bereich, in dem ein durch den Downlink-Steuerkanal gemeinsam genutzter Uplink-Kanal gemäß einem vordefinierten Uplink-Steuerungszeitpunkt und/oder einer Steuerungszeitpunktanpassung und/oder einer in dem Downlink-Steuerkanal benachrichtigten Zeitposition übertragen wird, als einen Uplink-Bereich des UE in der Zeiteinheit;
oder
Prozess 2: Bestimmen, durch das UE, eines Uplink-Bereichs, der Acknowledgement (ACK)/Negative Acknowledgement (NACK) für eine Downlink-Übertragung enthält, gemäß einer Feedback-Position des ACK/NACK;
wobei das Durchführen, durch das UE, der Uplink-Übertragung in dem Uplink-Bereich, der dem Downlink-Bereich gemäß dem Erkennungsergebnis entspricht, eines der folgenden Schemata umfasst:
Schema 1: falls ein Downlink-Steuerkanal mit einem Uplink-DCI-Format (Downlink-Steuerinformation) erkannt wird, dann Übertragen eines gemeinsam genutzten Uplink-Kanals durch das UE in einem Uplink-Bereich, der einem Downlink-Bereich entspricht, der den Downlink-Steuerkanal umfasst, wobei der Uplink-Bereich, der dem Downlink-Bereich entspricht, einer der folgenden ist: ein vordefinierter oder vorkonfigurierter Uplink-Bereich in derselben Zeiteinheit wie der Downlink-Bereich, der den Downlink-Steuerkanal umfasst, ein vordefinierter oder vorkonfigurierter Uplink-Bereich in einer Zeiteinheit nach der Zeiteinheit, der den Downlink-Bereich umfasst, der den Downlink-Kanal umfasst, ein Uplink-Bereich, der gemäß einer Angabe im Downlink-Steuerkanal bestimmt wird;
Schema 2: falls ein Downlink-Steuerkanal mit einem Downlink-DCI-Format erkannt wird, dann Rückführen von ACK/NACK durch das UE in einem Uplink-Bereich, der einem den Downlink-Steuerkanal umfassenden Downlink-Bereich entspricht, wobei der Downlink-Steuerkanal zur Angabe einer semipersistenten Downlink-Ressourcenfreigabe (SPS) verwendet wird, wobei der dem Downlink-Bereich entsprechende Uplink-Bereich einer der folgenden ist: ein vordefinierter oder vorkonfigurierter Uplink-Bereich in derselben Zeiteinheit wie der Downlink-Bereich, der den Downlink-Steuerkanal umfasst, ein Uplink-Bereich, der gemäß einem Bestimmungsfeld im Downlink-Steuerkanal bestimmt wird, ein Uplink-Bereich, der von einem Ende des Downlink-Bereichs, der den Downlink-Steuerkanal umfasst, um eine vorgegebene Zeitdauer nach dem Ende des Downlink-Bereichs beabstandet ist;
Schema 3: falls ein gemeinsam genutzter Downlink-Kanal erkannt wird, dann Rückführen, durch das UE, von ACK/NACK in einem Uplink-Bereich, der einem Downlink-Bereich entspricht, der den gemeinsam genutzten Downlink-Kanal umfasst, wobei der Uplink-Bereich, der dem Downlink-Bereich entspricht, einer der folgenden ist: ein vordefinierter oder vorkonfigurierter Uplink-Bereich in derselben Zeiteinheit wie der den gemeinsam genutzten Downlink-Kanal umfassende Downlink-Bereich, ein Uplink-Bereich, der gemäß einem Bestimmungsfeld in der Signalisierung des gemeinsam genutzten Downlink-Kanals bestimmt wird, ein Uplink-Bereich, der von einem Ende des den gemeinsam genutzten Downlink-Kanal umfassenden Downlink-Bereichs um eine voreingestellte Zeitspanne nach dem Ende des Downlink-Bereichs beabstandet ist.

2. Verfahren nach Anspruch 1, wobei das Bestimmen, durch das UE, der Startposition der Zeiteinheit des UE Folgendes umfasst:
Empfangen einer ersten Konfigurationssignalisierung durch das UE und Bestimmen der Startposition der Zeiteinheit gemäß der ersten Konfigurationssignalisierung, wobei:
die erste Konfigurationssignalisierung einen Zeitversatz der Zeiteinheit relativ zu einer voreingestellten Positionierungsreferenz enthält; oder die erste Konfigurationssignalisierung Informationen über die Startposition der Zeiteinheit enthält.

3. Verfahren nach einem der Ansprüche 1 bis 2, wobei das Verfahren ferner mindestens einen der folgenden Punkte umfasst:
die Mengen der Downlink-Bereiche in Zeiteinheiten für die Übertragung verschiedener Dienste sind gleich oder unterschiedlich;
die Mengen der Uplink-Bereiche in Zeiteinheiten für die Übertragung verschiedener Dienste sind gleich oder unterschiedlich;
falls die Zeiteinheit mindestens zwei Downlink-Bereiche umfasst, sind die Längen der jeweiligen Downlink-Bereiche gleich oder unterschiedlich;
falls die Zeiteinheit mindestens zwei Uplink-Bereiche umfasst, sind die Längen der jeweiligen Uplink-Bereiche gleich oder unterschiedlich.

4. Verfahren zum Übertragen von Daten, wobei das Verfahren Folgendes umfasst:
Bestimmen, durch einen eNB, einer Startposition einer Zeiteinheit eines UE, und Bestimmen einer Aufteilung von Uplink- und Downlink-Bereichen in der Zeiteinheit des UE, wobei die Zeiteinheit ein Slot ist;
Senden, durch den eNB, einer Downlink-Übertragung an das UE in einem Downlink-Bereich in der Zeiteinheit des UE; und
Empfangen, durch den eNB, einer Uplink-Übertragung des UE in einem Uplink-Bereich, der dem Downlink-Bereich entspricht, der die Downlink-Übertragung umfasst;
**dadurch gekennzeichnet, dass**:
das Empfangen, durch den eNB, der Uplink-Übertragung des UE im Uplink-Bereich, der dem Downlink-Bereich entspricht, der die Downlink-Übertragung umfasst, eines der folgenden Schemata umfasst:
Schema 1: falls die Downlink-Übertragung ein Downlink-Steuerkanal mit einem Downlink-DCI-Format ist, Empfangen einer ACK/NACK-Rückmeldung für den Downlink-Steuerkanal in einem Uplink-Bereich, der einem den Downlink-Steuerkanal umfassenden Downlink-Bereich entspricht, durch den eNB, wobei die Downlink-Übertragung zur Angabe einer Downlink-SPS-Ressourcenfreigabe verwendet wird, wobei der dem die Downlink-Übertragung umfassenden Downlink-Bereich entsprechende Uplink-Bereich einer der folgenden ist: ein vordefinierter oder vorkonfigurierter Uplink-Bereich in der gleichen Zeiteinheit wie der den Downlink-Steuerkanal umfassende Downlink-Bereich, ein Uplink-Bereich, der in einem Anzeigefeld im Downlink-Steuerkanal angegeben wird, ein Uplink-Bereich, der vom Ende des den Downlink-Steuerkanal umfassenden Downlink-Bereichs um eine voreingestellte Zeitspanne nach dem Ende des Downlink-Bereichs beabstandet ist;
Schema 2: falls die Downlink-Übertragung ein gemeinsam genutzter Downlink-Kanal ist, Empfangen einer ACK/NACK-Rückmeldung für den gemeinsam genutzten Downlink-Kanal durch den eNB in einem Uplink-Bereich, der einem den gemeinsam genutzten Downlink-Kanal umfassenden Downlink-Bereich entspricht, wobei der Uplink-Bereich, der dem die Downlink-Übertragung umfassenden Downlink-Bereich entspricht, einer der folgenden ist: ein vordefinierter oder vorkonfigurierter Uplink-Bereich in der gleichen Zeiteinheit wie der den gemeinsam genutzten Downlink-Kanal umfassende Downlink-Bereich, ein Uplink-Bereich, der in einem Anzeigefeld in der Signalisierung der Zeitplanung des gemeinsam genutzten Downlink-Kanals angegeben wird, ein Uplink-Bereich, der vom Ende des den gemeinsam genutzten Downlink-Kanal umfassenden Downlink-Bereichs um eine voreingestellte Zeitspanne nach dem Ende des Downlink-Bereichs beabstandet ist;
Schema 3: falls die Downlink-Übertragung ein Downlink-Steuerkanal mit einem Uplink-DCI-Format ist, Empfangen eines gemeinsam genutzten Uplink-Kanals durch den eNB, der dem Downlink-Steuerkanal in einem Uplink-Bereich entspricht, der einem Downlink-Bereich entspricht, der den Downlink-Steuerkanal umfasst, wobei der Uplink-Bereich, der dem Downlink-Bereich entspricht, der die Downlink-Übertragung umfasst, einer der folgenden ist: ein vordefinierter oder vorkonfigurierter Uplink-Bereich in der gleichen Zeiteinheit wie der den Downlink-Steuerkanal umfassende Downlink-Bereich, ein vordefinierter oder vorkonfigurierter Uplink-Bereich in einer Zeiteinheit nach der Zeiteinheit, die den den Downlink-Steuerkanal umfassenden Downlink-Bereich umfasst, ein Uplink-Bereich, der in einem Anzeigefeld im Downlink-Steuerkanal angegeben wird.

5. Verfahren nach Anspruch 4, wobei, nachdem der eNB die Startposition der Zeiteinheit des UE bestimmt hat, das Verfahren ferner Folgendes umfasst:
Benachrichtigen, durch den eNB, des UE über die Startposition mittels einer ersten Konfigurationssignalisierung, wobei:
die erste Konfigurationssignalisierung einen Zeitversatz der Zeiteinheit des UE relativ zu einer voreingestellten Referenzzeiteinheit enthält; oder
die erste Konfigurationssignalisierung Informationen über die Startposition der Zeiteinheit des UE enthält.

6. Verfahren nach Anspruch 4, wobei das Konfigurieren von UEs an Rändern von Zellen mit einer festen Startposition der Zeiteinheit durch den eNB über die erste Konfigurationssignalisierung erfolgt und die feste Startposition der Zeiteinheit eine vordefinierte oder vorgeschriebene Startposition ist; oder
Konfigurieren, durch den eNB, von UEs in Zentren von Zellen mit gleichen oder unterschiedlichen Startpositionen von Zeiteinheiten über die erste Konfigurationssignalisierung.

7. Verfahren nach Anspruch 4, wobei das Bestimmen, durch den eNB, der Startposition der Zeiteinheit des UE und das Bestimmen der Aufteilung von Uplink- und Downlink-Bereichen in der Zeiteinheit des UE Folgendes umfasst:
Bestimmen, durch den eNB, eines Downlink-Bereichs in der Zeiteinheit des UE als GP-Bereich oder eines Downlink-Bereichs in einer Zeiteinheit eines anderen UE; und/oder Bestimmen, durch den eNB, eines Uplink-Bereichs in der Zeiteinheit des UE als GP-Bereich oder eines Uplink-Bereichs in einer Zeiteinheit eines anderen UE.

8. Verfahren nach einem der Ansprüche 5 bis 7, wobei das Verfahren ferner mindestens einen der folgenden Punkte umfasst:
die Mengen der Downlink-Bereiche in Zeiteinheiten für die Übertragung verschiedener Dienste sind gleich oder unterschiedlich;
die Mengen der Uplink-Bereiche in Zeiteinheiten für die Übertragung verschiedener Dienste sind gleich oder unterschiedlich;
falls die Zeiteinheit mindestens zwei Downlink-Bereiche umfasst, sind die Längen der jeweiligen Downlink-Bereiche gleich oder unterschiedlich;
falls die Zeiteinheit mindestens zwei Uplink-Bereiche umfasst, sind die Längen der jeweiligen Uplink-Bereiche gleich oder unterschiedlich.

9. Ein UE, das Folgendes umfasst:
eine Bestimmungseinheit (51), die ausgebildet ist, um eine Startposition einer Zeiteinheit des UE zu bestimmen,
und um eine Aufteilung von Uplink- und Downlink-Bereichen in der Zeiteinheit durch eine der folgenden Operationen zu bestimmen:
Operation 1: Bestimmen eines Uplink-Bereichs in der Zeiteinheit gemäß einer Uplink-Steuerkanalsignalisierung, Folgendes umfassend: wenn das UE einen Downlink-Steuerkanal mit einem Uplink-DCI-Format empfängt, indem ein Downlink-Bereich in der Zeiteinheit für den Downlink-Steuerkanal erkannt wird, bestimmt das UE einen Uplink-Bereich, in dem ein vom Downlink-Steuerkanal geplanter gemeinsamer Uplink-Kanal übertragen wird, gemäß einem vordefinierten Uplink-Steuerkanal-Zeitplan und/oder einer Steuerkanal-Zeitplananpassung und/oder einer im Downlink-Steuerkanal mitgeteilten Zeitposition als Uplink-Bereich des UE in einer Zeiteinheit;
oder
Operation 2: Bestimmen eines ACK/NACK enthaltenden Uplink-Bereichs für eine Downlink-Übertragung gemäß einer Rückkopplungsposition des ACK/NACK;
wobei die Zeiteinheit ein Slot ist;
eine Detektionseinheit (52), die ausgebildet ist, einen Downlink-Steuerkanal mit dem Downlink-Bereich der Zeiteinheit zu erkennen; und
eine Sendeeinheit (53), die ausgebildet ist, um ein Durchführen einer Uplink-Übertragung in einem Uplink-Bereich, der dem Downlink-Bereich entspricht, gemäß einem Erkennungsergebnis der Detektionseinheit durchzuführen;
wobei die Sendeeinheit (53) so ausgebildet ist, dass sie eines der folgenden Verfahren durchführt:
falls ein Downlink-Steuerkanal mit einem Uplink-DCI-Format erkannt wird, einen gemeinsam genutzten Uplink-Kanal in einem Uplink-Bereich zu übertragen, der einem Downlink-Bereich entspricht, der den Downlink-Steuerkanal umfasst, wobei der dem Downlink-Bereich entsprechende Uplink-Bereich einer der folgenden ist: ein vordefinierter oder vorkonfigurierter Uplink-Bereich in der gleichen Zeiteinheit wie der den Downlink-Steuerkanal umfassende Downlink-Bereich, ein Uplink-Bereich, der gemäß einem Bestimmungsfeld im Downlink-Steuerkanal bestimmt wird, ein Uplink-Bereich, der vom Ende des den Downlink-Steuerkanal umfassenden Downlink-Bereichs um eine voreingestellte Zeitspanne nach dem Ende des Downlink-Bereichs beabstandet ist;
falls ein Downlink-Steuerkanal mit einem Downlink-DCI-Format erkannt wird, ACK/NACK in einem Uplink-Bereich zurückzumelden, der einem den Downlink-Steuerkanal umfassenden Downlink-Bereich entspricht, wobei der Downlink-Steuerkanal zum Angeben einer Downlink-SPS-Ressourcenfreigabe verwendet wird, wobei der dem Downlink-Bereich entsprechende Uplink-Bereich einer der folgenden ist: ein vordefinierter oder vorkonfigurierter Uplink-Bereich in der gleichen Zeiteinheit wie der den gemeinsam genutzten Downlink-Kanal umfassende Downlink-Bereich, ein Uplink-Bereich, der gemäß einem Bestimmungsfeld in der Signalisierung des gemeinsam genutzten Downlink-Kanals bestimmt wird, ein Uplink-Bereich, der von dem Ende des den gemeinsam genutzten Downlink-Kanal umfassenden Downlink-Bereichs um eine voreingestellte Zeitspanne nach dem Ende des Downlink-Bereichs beabstandet ist; und
falls ein gemeinsam genutzter Downlink-Kanal erkannt wird, ACK/NACK in einem Uplink-Bereich zurückzuführen, der einem Downlink-Bereich entspricht, der den gemeinsam genutzten Downlink-Kanal umfasst, wobei der Uplink-Bereich, der dem Downlink-Bereich entspricht, einer der folgenden ist: ein vordefinierter oder vorkonfigurierter Uplink-Bereich in derselben Zeiteinheit wie der Downlink-Bereich, der den Downlink-Steuerkanal umfasst, ein vordefinierter oder vorkonfigurierter Uplink-Bereich in einer Zeiteinheit nach der Zeiteinheit, die den Downlink-Bereich umfasst, der den Downlink-Steuerkanal umfasst, ein Uplink-Bereich, der gemäß einem Bestimmungsfeld im Downlink-Steuerkanal bestimmt wird.

10. Das UE nach Anspruch 9, wobei die Bestimmungseinheit (51) ausgebildet ist, um eine Startposition der Zeiteinheit des UE zu bestimmen, und um eine Aufteilung von Uplink- und Downlink-Bereichen in der Zeiteinheit zu konfigurieren:
Empfangen einer ersten Konfigurationssignalisierung, und Bestimmen der Startposition der Zeiteinheit gemäß der ersten Konfigurationssignalisierung, wobei:
die erste Konfigurationssignalisierung einen Zeitversatz der Zeiteinheit relativ zu einer voreingestellten Positionierungsreferenz enthält; oder die erste Konfigurationssignalisierung Informationen über die Startposition der Zeiteinheit enthält.

11. Ein eNB, der Folgendes umfasst:
eine Bestimmungseinheit (71), die ausgebildet ist, um eine Startposition einer Zeiteinheit eines UE zu bestimmen, und um eine Aufteilung von Uplink- und Downlink-Bereichen in der Zeiteinheit des UE zu bestimmen, wobei die Zeiteinheit ein Slot ist;
eine Downlink-Sendeeinheit (72), die ausgebildet ist, um eine Downlink-Übertragung an das UE in einem Downlink-Bereich in der Zeiteinheit des UE zu senden; und
eine Empfangseinheit (73), die ausgebildet ist, eine Uplink-Übertragung des UE in einem Uplink-Bereich zu empfangen, der dem Downlink-Bereich entspricht, der die Downlink-Übertragung umfasst;
wobei die Empfangseinheit (73) ausgebildet ist, um eines der folgenden Verfahren durchzuführen:
falls die Downlink-Übertragung ein Downlink-Steuerkanal mit einem Downlink-DCI-Format ist, eine ACK/NACK-Rückmeldung für den Downlink-Steuerkanal in einem Uplink-Bereich zu empfangen, der einem Downlink-Bereich entspricht, der den Downlink-Steuerkanal umfasst, wobei die Downlink-Übertragung zum Angeben einer Downlink-SPS-Ressourcenfreigabe verwendet wird, wobei der dem Downlink-Bereich entsprechende Uplink-Bereich einer der folgenden ist: ein vordefinierter oder vorkonfigurierter Uplink-Bereich in der gleichen Zeiteinheit wie der Downlink-Bereich, der den Downlink-Steuerkanal umfasst, ein Uplink-Bereich, der in einem Anzeigefeld im Downlink-Steuerkanal angegeben wird, ein Uplink-Bereich, der vom Ende des Downlink-Bereichs, der den Downlink-Steuerkanal umfasst, um eine voreingestellte Zeitspanne nach dem Ende des Downlink-Bereichs beabstandet ist;
falls die Downlink-Übertragung ein gemeinsam genutzter Downlink-Kanal ist, um ACK/NACK-Rückmeldungen für den gemeinsam genutzten Downlink-Kanal in einem Uplink-Bereich zu empfangen, der einem den gemeinsam genutzten Downlink-Kanal umfassenden Downlink-Bereich entspricht, wobei der dem Downlink-Bereich entsprechende Uplink-Bereich einer der folgenden ist: ein vordefinierter oder vorkonfigurierter Uplink-Bereich in der gleichen Zeiteinheit wie der den gemeinsam genutzten Downlink-Kanal umfassende Downlink-Bereich, ein Uplink-Bereich, der in einem Anzeigefeld bei der Signalisierung des gemeinsam genutzten Downlink-Kanals angegeben ist, ein Uplink-Bereich, der vom Ende des den gemeinsam genutzten Downlink-Kanal umfassenden Downlink-Bereichs um eine voreingestellte Zeitspanne nach dem Ende des Downlink-Bereichs beabstandet ist; oder
falls die Downlink-Übertragung ein Downlink-Steuerkanal mit einem Uplink-DCI-Format ist, einen gemeinsam genutzten Uplink-Kanal zu empfangen, der dem Downlink-Steuerkanal in einem Uplink-Bereich entspricht, der einem Downlink-Bereich entspricht, der den Downlink-Steuerkanal umfasst, wobei der dem Downlink-Bereich entsprechende Uplink-Bereich einer der folgenden ist: ein vordefinierter oder vorkonfigurierter Uplink-Bereich in der gleichen Zeiteinheit wie der den Downlink-Steuerkanal umfassende Downlink-Bereich, ein vordefinierter oder vorkonfigurierter Uplink-Bereich in einer Zeiteinheit nach der Zeiteinheit, die den den Downlink-Steuerkanal umfassenden Downlink-Bereich umfasst, ein Uplink-Bereich, der in einem Anzeigefeld im Downlink-Steuerkanal angegeben ist.

12. Der eNB nach Anspruch 11, wobei die Bestimmungseinheit (71) ferner ausgebildet ist, um mindestens eine der folgenden Operationen durchzuführen:
Operation 1:
Benachrichtigen des UE über die Startposition durch eine erste Konfigurationssignalisierung, wobei:
die erste Konfigurationssignalisierung einen Zeitversatz der Zeiteinheit des UE relativ zu einer voreingestellten Referenzzeiteinheit enthält; oder
die erste Konfigurationssignalisierung Informationen über die Startposition der Zeiteinheit des UE enthält;
Operation 2:
Konfigurieren von UEs an den Rändern von Zellen mit einer festen Startposition der Zeiteinheit über die erste Konfigurationssignalisierung, wobei die feste Startposition der Zeiteinheit eine vordefinierte oder vorgeschriebene Startposition ist; oder
Konfigurieren von UEs in Zentren von Zellen mit gleichen oder unterschiedlichen Startpositionen von Zeiteinheiten über die erste Konfigurationssignalisierung.

13. Der eNB nach Anspruch 11, wobei die Bestimmungseinheit (71) für Folgendes ausgebildet ist:
um einen Downlink-Bereich in der Zeiteinheit des UE als einen GP-Bereich oder einen Downlink-Bereich in einer Zeiteinheit eines anderen UE zu bestimmen; und/oder
um einen Uplink-Bereich in der Zeiteinheit des UE als einen GP-Bereich oder einen Uplink-Bereich in einer Zeiteinheit eines anderen UE zu bestimmen.

## Revendications

1. Procédé de transmission de données, le procédé comprenant les étapes suivantes :
déterminer, par un UE, une position de début d'une unité de temps de l'UE, et déterminer une division de régions de liaison montante et de liaison descendante dans l'unité de temps, où l'unité de temps est un intervalle ;
détecter, par l'UE, un canal de contrôle de liaison descendante dans la région de liaison descendante de l'unité de temps ; et
réaliser, par l'UE, une transmission de liaison montante dans une région de liaison montante correspondant à la région de liaison descendante en fonction d'un résultat de détection ;
**caractérisé par le fait que**
la détermination, par l'UE, de la division des régions de liaison montante et de liaison descendante dans l'unité de temps, comprend l'un des processus suivants :
processus 1 : déterminer, par l'UE, une région de liaison montante dans l'unité de temps conformément à une signalisation de planification de liaison montante, ce qui comprend : lorsque l'UE reçoit un canal de contrôle de liaison descendante avec un format DCI de liaison montante en détectant une région de liaison descendante dans l'unité de temps pour le canal de contrôle de liaison descendante, l'UE détermine une région de liaison montante dans laquelle un canal partagé de liaison montante planifié par le canal de contrôle de liaison descendante est transmis, selon un timing de planification de liaison montante prédéfini, et/ou un ajustement de timing de planification et/ou une position temporelle notifiée dans le canal de contrôle de liaison descendante, en tant que région de liaison montante de l'UE dans l'unité de temps ;
ou
processus 2 : déterminer, par l'UE, une région de liaison montante transportant un accusé de réception, un ACK/accusé de réception négatif, NACK, pour une transmission de liaison descendante en fonction **d'une** position de retour d'information de l'ACK/NACK ;
où l'exécution, par l'UE, de la transmission de liaison montante dans la région de liaison montante correspondant à la région de liaison descendante en fonction du résultat de détection comprend l'un des schémas suivants :
schéma 1 : si un canal de contrôle de liaison descendante avec un format d'informations de contrôle de liaison descendante, DCI, est détecté, transmettre alors, par l'UE, un canal partagé de liaison montante dans une région de liaison montante correspondant à une région de liaison descendante comprenant le canal de contrôle de liaison descendante, où la région de liaison montante correspondant à la région de liaison descendante est l'une des suivantes : une région de liaison montante prédéfinie ou préconfigurée dans une unité de temps identique à la région de liaison descendante comprenant le canal de contrôle de liaison descendante, une région de liaison montante prédéfinie ou préconfigurée dans une unité de temps après l'unité de temps comprenant la région de liaison descendante comprenant le canal de liaison descendante, une région de liaison montante déterminée selon un champ d'indication dans le canal de contrôle de liaison descendante ;
schéma 2 : si un canal de contrôle de liaison descendante avec un format DCI de liaison descendante est détecté, renvoyer alors, par l'UE, un ACK/NACK dans une région de liaison montante correspondant à une région de liaison descendante comprenant le canal de contrôle de liaison descendante, où le canal de contrôle de liaison descendante est utilisé pour indiquer une libération de ressources SPS, Semi-Persistent Scheduling, de liaison descendante, où la région de liaison montante correspondant à la région de liaison descendante est l'une des suivantes : une région de liaison montante prédéfinie ou préconfigurée dans une même unité de temps que la région de liaison descendante comprenant le canal de contrôle de liaison descendante, une région de liaison montante déterminée selon un champ d'indication dans le canal de contrôle de liaison descendante, une région de liaison montante espacée d'une extrémité de la région de liaison descendante comprenant le canal de contrôle de liaison descendante d'une durée prédéfinie après la fin de la région de liaison descendante ;
schéma 3 : si un canal partagé de liaison descendante est détecté, renvoyer alors, par l'UE, un ACK/NACK dans une région de liaison montante correspondant à une région de liaison descendante comprenant le canal partagé de liaison descendante, où la région de liaison montante correspondant à la région de liaison descendante est l'une des suivantes : une région de liaison montante prédéfinie ou préconfigurée dans une même unité de temps que la région de liaison descendante comprenant le canal partagé de liaison descendante, une région de liaison montante déterminée selon un champ d'indication dans la signalisation de planification du canal partagé de liaison descendante, une région de liaison montante espacée d'une extrémité de la région de liaison descendante comprenant le canal partagé de liaison descendante d'une durée prédéfinie après la fin de la région de liaison descendante.

2. Procédé selon la revendication 1, dans lequel la détermination, par l'UE, de la position de début de l'unité de temps de l'UE comprend les étapes suivantes : recevoir, par l'UE, une première signalisation de configuration, et déterminer la position de début de l'unité de temps selon la première signalisation de configuration, où :
la première signalisation de configuration transporte un décalage temporel de l'unité de temps par rapport à une unité de temps de référence prédéfinie ; ou la première signalisation de configuration transporte des informations sur la position de début de l'unité de temps.

3. Procédé selon l'une quelconque des revendications 1 et 2, le procédé comprenant en outre au moins l'un des points suivants :
les quantités de régions de liaison descendante en unités de temps pour transmettre différents services sont identiques ou différentes ;
les quantités de régions de liaison montante en unités de temps pour transmettre différents services sont identiques ou différentes ;
si l'unité de temps comprend au moins deux régions de liaison descendante, les longueurs des régions de liaison descendante respectives sont identiques ou différentes ;
si l'unité de temps comprend au moins deux régions de liaison montante, les longueurs des régions de liaison montante respectives sont identiques ou différentes.

4. Procédé de transmission de données, le procédé comprenant les étapes suivantes :
déterminer, par un eNB, une position de début d'une unité de temps d'un UE, et déterminer une division de régions de liaison montante et de liaison descendante dans l'unité de temps de l'UE, où l'unité de temps est un intervalle ;
envoyer, par l'eNB, une transmission de liaison descendante vers l'UE dans une région de liaison descendante dans l'unité de temps de l'UE ; et
recevoir, par l'eNB, une transmission de liaison montante de l'UE dans une région de liaison montante correspondant à la région de liaison descendante comprenant la transmission de liaison descendante ;
**caractérisé par le fait que**
la réception, par l'eNB, de la transmission de liaison montante de l'UE dans la région de liaison montante correspondant à la région de liaison descendante comprenant la transmission de liaison descendante, comprend l'un des schémas suivants :
schéma 1 : si la transmission descendante est un canal de contrôle de liaison descendante avec un format DCI de liaison descendante, recevoir, par l'eNB, un retour ACK/NACK pour le canal de contrôle de liaison descendante dans une région de liaison montante correspondant à une région de liaison descendante comprenant le canal de contrôle de liaison descendante, où la transmission de liaison descendante est utilisée pour indiquer une libération de ressource SPS de liaison descendante, où la région de liaison montante correspondant à la région de liaison descendante comprenant la transmission de liaison descendante est l'une des suivantes : une région de liaison montante prédéfinie ou préconfigurée dans la même unité de temps que la région de liaison descendante comprenant le canal de contrôle de liaison descendante, une région de liaison montante indiquée dans un champ d'indication dans le canal de contrôle de liaison descendante, une région de liaison montante espacée de la fin de la région de liaison descendante comprenant le canal de contrôle de liaison descendante d'une durée prédéfinie après la fin de la région de liaison descendante ;
schéma 2 : si la transmission de liaison descendante est un canal partagé de liaison descendante, recevoir, par l'eNB, un retour ACK/NACK pour le canal partagé de liaison descendante dans une région de liaison montante correspondant à une région de liaison descendante comprenant le canal partagé de liaison descendante, où la région de liaison montante correspondant à la région de liaison descendante comprenant la transmission de liaison descendante est l'une des suivantes : une région de liaison montante prédéfinie ou préconfigurée dans la même unité de temps que la région de liaison de liaison descendante comprenant le canal partagé de liaison descendante, une région de liaison montante indiquée dans un champ d'indication dans la signalisation de planification du canal partagé de liaison descendante, une région de liaison montante espacée de la fin de la région de liaison descendante comprenant le canal partagé de liaison descendante d'une durée prédéfinie après la fin de la région de liaison descendante ;
schéma 3 : si la transmission de liaison descendante est un canal de contrôle de liaison descendante avec un format DCI de liaison montante, recevoir, par l'eNB, un canal partagé de liaison montante correspondant au canal de contrôle de liaison descendante dans une région de liaison montante correspondant à une région de liaison descendante comprenant le canal de contrôle de liaison descendante, où la région de liaison montante correspondant à la région de liaison descendante comprenant la transmission de liaison descendante est l'une des suivantes : une région de liaison montante prédéfinie ou préconfigurée dans la même unité de temps que la région de liaison descendante comprenant le canal de contrôle de liaison descendante, une région de liaison montante prédéfinie ou préconfigurée dans une unité de temps après l'unité de temps comprenant la région de liaison descendante comprenant le canal de contrôle de liaison descendante, une région de liaison montante indiquée dans un champ d'indication dans le canal de contrôle de liaison descendante.

5. Procédé selon la revendication 4, dans lequel, après que l'eNB a déterminé la position de départ de l'unité de temps de l'UE, le procédé comprend en outre l'étape suivante :
notifier, par l'eNB, à l'UE, la position de départ par l'intermédiaire d'une première signalisation de configuration, où :
la première signalisation de configuration transporte un décalage temporel de l'unité de temps de l'UE par rapport à une unité de temps de référence prédéfinie ; ou
la première signalisation de configuration transporte des informations sur la position de départ de l'unité de temps de l'UE.

6. Procédé selon la revendication 4, comprenant la configuration, par le eNB, des UE aux bords des cellules avec une position de départ fixe de l'unité de temps par l'intermédiaire du premier signal de configuration, et la position de départ fixe de l'unité de temps est une position de départ prédéfinie ou prescrite ; ou
la configuration, par l'eNB, des UE au centre des cellules avec des positions de départ identiques ou différentes des unités de temps par l'intermédiaire du premier signal de configuration.

7. Procédé selon la revendication 4, dans lequel la détermination, par l'eNB, de la position de départ de l'unité de temps de l'UE, et la détermination de la division des régions de liaison montante et de liaison descendante dans l'unité de temps de l'UE comprennent les étapes suivantes :
déterminer, par l'eNB, une région de liaison descendante dans l'unité de temps de l'UE en tant que région GP ou région de liaison descendante dans une unité de temps d'un autre UE ; et/ou
déterminer, par l'eNB, une région de liaison montante dans l'unité de temps de l'UE en tant que région GP ou région de liaison montante dans une unité de temps d'un autre UE.

8. Procédé selon l'une quelconque des revendications 5 à 7, le procédé comprenant en outre au moins l'un des points suivants :
les quantités de régions de liaison descendante en unités de temps pour transmettre différents services sont identiques ou différentes ;
les quantités de régions de liaison montante en unités de temps pour transmettre différents services sont identiques ou différentes ;
si l'unité de temps comprend au moins deux régions de liaison descendante, alors les longueurs des régions de liaison descendante respectives seront identiques ou différentes ;
si l'unité de temps comprend au moins deux régions de liaison montante, alors les longueurs des régions de liaison montante respectives seront identiques ou différentes.

9. UE comprenant :
une unité de détermination (51) configurée pour déterminer une position de départ d'une unité de temps de l'UE et pour déterminer une division des régions de liaison montante et de liaison descendante dans l'unité de temps par l'un des processus suivants :
opération 1 : déterminer une région de liaison montante dans l'unité de temps conformément à une signalisation de planification de liaison montante, ce qui comprend : lorsque l'UE reçoit un canal de contrôle de liaison descendante avec un format DCI de liaison montante en détectant une région de liaison descendante dans l'unité de temps pour le canal de contrôle de liaison descendante, l'UE détermine une région de liaison montante dans laquelle un canal partagé de liaison montante planifié par le canal de contrôle de liaison descendante est transmis, selon un timing de planification de liaison montante prédéfini, et/ou un ajustement de timing de planification et/ou une position temporelle notifiée dans le canal de contrôle de liaison descendante, en tant que région de liaison montante de l'UE dans une unité de temps ;
ou
opération 2 : déterminer une région de liaison montante transportant un ACK/NACK pour une transmission de liaison descendante conformément à une position de retour d'information de l'ACK/NACK ;
où l'unité de temps est un intervalle ;
une unité de détection (52) configurée pour détecter un canal de contrôle de liaison descendante avec la région de liaison descendante de l'unité de temps ; et
une unité de transmission (53) configurée pour effectuer une transmission de liaison montante dans une région de liaison montante correspondant à la région de liaison descendante selon un résultat de détection de l'unité de détection ;
où l'unité de transmission (53) est configurée pour effectuer l'une des étapes suivantes :
si un canal de contrôle de liaison descendante avec un format DCI de liaison montante est détecté, transmettre un canal partagé de liaison montante dans une région de liaison montante correspondant à une région de liaison descendante comprenant le canal de contrôle de liaison descendante, où la région de liaison montante correspondant à la région de liaison descendante est l'une des suivantes : une région de liaison montante prédéfinie ou préconfigurée dans la même unité de temps que la région de liaison descendante comprenant le canal de contrôle de liaison descendante, une région de liaison montante déterminée en fonction d'un champ d'indication dans le canal de contrôle de liaison descendante, une région de liaison montante espacée de la fin de la région de liaison descendante comprenant le canal de contrôle de liaison descendante d'une durée prédéfinie après la fin de la région de liaison descendante ;
si un canal de contrôle de liaison descendante avec un format DCI de liaison descendante est détecté, renvoyer un ACK/NACK dans une région de liaison montante correspondant à une région de liaison descendante comprenant le canal de contrôle de liaison descendante, où le canal de contrôle de liaison descendante est utilisé pour indiquer une libération de ressource SPS de liaison descendante, où la région de liaison montante correspondant à la région de liaison descendante est l'une des suivantes : une région de liaison montante prédéfinie ou préconfigurée dans la même unité de temps que la région de liaison descendante comprenant le canal partagé de liaison descendante, une région de liaison montante déterminée en fonction d'un champ d'indication dans la signalisation de planification du canal partagé de liaison descendante, une région de liaison montante espacée de la fin de la région de liaison descendante comprenant le canal partagé de liaison descendante d'une durée prédéfinie après la fin de la région de liaison descendante ; et
si un canal partagé de liaison descendante est détecté, renvoyer un ACK/NACK dans une région de liaison montante correspondant à une région de liaison descendante comprenant le canal partagé de liaison descendante, où la région de liaison montante correspondant à la région de liaison descendante est l'une des suivantes : une région de liaison montante prédéfinie ou préconfigurée dans la même unité de temps que la région de liaison descendante comprenant le canal de contrôle de liaison descendante, une région de liaison montante prédéfinie ou préconfigurée dans une unité de temps après l'unité de temps comprenant la région de liaison descendante comprenant le canal de contrôle de liaison descendante, une région de liaison montante déterminée en fonction d'un champ d'indication dans le canal de contrôle de liaison descendante.

10. UE selon la revendication 9, dans lequel l'unité de détermination (51) est configurée pour déterminer une position de début de l'unité de temps de l'UE, et pour déterminer une division des régions de liaison montante et de liaison descendante dans l'unité de temps en :
recevant une première signalisation de configuration, et en déterminant la position de début de l'unité de temps selon la première signalisation de configuration, où :
la première signalisation de configuration transporte un décalage temporel de l'unité de temps par rapport à une unité de temps de référence prédéfinie ; ou la première signalisation de configuration transporte des informations sur la position de début de l'unité de temps.

11. eNB, comprenant :
une unité de détermination (71) configurée pour déterminer une position de départ de l'unité de temps d'un UE, et pour déterminer une division des régions de liaison montante et de liaison descendante dans l'unité de temps de l'UE, où l'unité de temps est un intervalle ;
une unité de transmission de liaison descendante (72) configurée pour envoyer une transmission de liaison descendante à l'UE dans une région de liaison descendante dans l'unité de temps de l'UE ; et
une unité de réception (73) configurée pour recevoir une transmission de liaison montante de l'UE dans une région de liaison montante correspondant à la région de liaison descendante comprenant la transmission de liaison descendante ;
où l'unité de réception (73) est configurée pour effectuer l'une des opérations suivantes :
si la transmission descendante est un canal de contrôle de liaison descendante avec un format DCI de liaison descendante, recevoir un retour ACK/NACK pour le canal de contrôle de liaison descendante dans une région de liaison montante correspondant à une région de liaison descendante comprenant le canal de contrôle de liaison descendante, où la transmission de liaison descendante est utilisée pour indiquer une libération de ressource SPS de liaison descendante, où la région de liaison montante correspondant à la région de liaison descendante est l'une des suivantes : une région de liaison montante prédéfinie ou préconfigurée dans la même unité de temps que la région de liaison descendante comprenant le canal de contrôle de liaison descendante, une région de liaison montante indiquée dans un champ d'indication dans le canal de contrôle de liaison descendante, une région de liaison montante espacée de la fin de la région de liaison descendante comprenant le canal de contrôle de liaison descendante d'une durée prédéfinie après la fin de la région de liaison descendante ;
si la transmission de liaison descendante est un canal partagé, recevoir un retour ACK/NACK pour le canal partagé de liaison descendante dans une région de liaison montante correspondant à une région de liaison descendante comprenant le canal partagé de liaison descendante, la région de liaison montante correspondant à la région de liaison descendante est l'une des suivantes : une région de liaison montante prédéfinie ou préconfigurée dans la même unité de temps que la région de liaison de liaison descendante comprenant le canal partagé de liaison descendante, une région de liaison montante indiquée dans un champ d'indication dans la signalisation de planification du canal partagé de liaison descendante, une région de liaison montante espacée de la fin de la région de liaison descendante comprenant le canal partagé de liaison descendante d'une durée prédéfinie après la fin de la région de liaison descendante ; ou
si la transmission de liaison descendante est un canal de contrôle de liaison descendante avec un format DCI de liaison montante, recevoir un canal partagé de liaison montante correspondant au canal de contrôle de liaison descendante dans une région de liaison montante correspondant à une région de liaison descendante comprenant le canal de contrôle de liaison descendante, où la région de liaison montante correspondant à la région de liaison descendante est l'une des suivantes : une région de liaison montante prédéfinie ou préconfigurée dans la même unité de temps que la région de liaison descendante comprenant le canal de contrôle de liaison descendante, une région de liaison montante prédéfinie ou préconfigurée dans une unité de temps après l'unité de temps comprenant la région de liaison descendante comprenant le canal de contrôle de liaison descendante, une région de liaison montante indiquée dans un champ d'indication dans le canal de contrôle de liaison descendante.

12. eNB selon la revendication 11, dans lequel l'unité de détermination (71) est en outre configurée pour effectuer au moins l'une des opérations suivantes :
opération 1 :
notifier à l'UE, la position de départ par l'intermédiaire d'une première signalisation de configuration, où :
la première signalisation de configuration transporte un décalage temporel de l'unité de temps de l'UE par rapport à une unité de temps de référence prédéfinie ; ou
la première signalisation de configuration transporte des informations sur la position de départ de l'unité de temps de l'UE ;
opération 2 :
configurer des UE aux bords des cellules avec une position de départ fixe de l'unité de temps par l'intermédiaire du premier signal de configuration, et la position de départ fixe de l'unité de temps est une position de départ prédéfinie ou prescrite ; ou
configurer des UE au centre des cellules avec des positions de départ identiques ou différentes des unités de temps par l'intermédiaire du premier signal de configuration.

13. eNB selon la revendication 11, dans lequel l'unité de détermination (71) est configurée :
pour déterminer une région de liaison descendante dans l'unité de temps de l'UE en tant que région GP ou région de liaison descendante dans une unité de temps d'un autre UE ; et/ou
pour déterminer une région de liaison montante dans l'unité de temps de l'UE en tant que région GP ou région de liaison montante dans une unité de temps d'un autre UE.
